(19)

**Europäisches Patentamt**
**European Patent Office**
**Office européen des brevets**

(11) **EP 2 094 018 B1**

(12) **EUROPEAN PATENT SPECIFICATION**

(45) Date of publication and mention
of the grant of the patent:
**09.11.2011 Bulletin 2011/45**

(51) Int Cl.:
**H04N 7/26** (2006.01)

(21) Application number: **09250408.3**

(22) Date of filing: **16.02.2009**

(54) **Encoding apparatus for high frame rate videos, method and program**

Vorrichtung, Verfahren und Programm für die Kodierung von Videos mit hoher Bildrate

Appareil, méthode et programme pour le codage de vidéos ayant une fréquence d'images élevée

(84) Designated Contracting States:
**DE FR GB**

(30) Priority: **19.02.2008 JP 2008037049**

(43) Date of publication of application:
**26.08.2009 Bulletin 2009/35**

(73) Proprietor: **Sony Corporation**
**Tokyo (JP)**

(72) Inventor: **Kobayashi, Seiji**
**Tokyo (JP)**

(74) Representative: **Nicholls, Michael John**
**J.A. Kemp & Co.**
**14 South Square**
**Gray's Inn**
**London**
**WC1R 5JJ (GB)**

(56) References cited:
**WO-A-2004/098198**

• **XIANGYANG JI ET AL: "Architectures of Incorporating MPEG-4 Avc into Three-Dimensional Subband Video Coding" 24. PICTURE CODING SYMPOSIUM;15-12-2004 - 17-12-2004; SAN FRANSISCO,, 15 December 2004 (2004-12-15), XP030080174**

• **PESQUET-POPESCU B ET AL: "Three-dimensional lifting schemes for motion compensated video compression" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US, vol. 3, 7 May 2001 (2001-05-07), pages 1793-1796, XP010802887 ISBN: 978-0-7803-7041-8**

• **ANDREOPOULOS Y ET AL: "Spatio-temporal-snr scalable wavelet coding with motion compensated dct base-laver architectures" PROCEEDINGS 2003 INTERNATIONAL CONFERENCE ON IMAGE PROCESSING. ICIP-2003. BARCELONA, SPAIN, SEPT. 14 - 17, 2003; [INTERNATIONAL CONFERENCE ON IMAGE PROCESSING], NEW YORK, NY : IEEE, US, vol. 2, 14 September 2003 (2003-09-14), pages 795-798, XP010669923 ISBN: 978-0-7803-7750-9**

## Description

The present invention relates to an image-capturing apparatus, an image processing apparatus, an image processing method, and a program. More particularly, the present invention relates to an image-capturing apparatus that realizes speeding up of an image compression process, to an image processing apparatus therefor, to an image processing method therefor, and to a program therefor.

In the field of image-capturing apparatuses, in recent years, high-speed image-capturing apparatuses capable of performing image capturing at a rate higher than a normal video frame rate (60 frames per second, 50 frames per second, 24 frames per second, etc.) have become available. In such a high-speed image-capturing apparatus, the data rate of an image-capturing signal at a high resolution and at a high frame rate has become higher, and there has been a demand for an image signal process and an image compression process performed on data that is input at this high-speed data rate to be performed at a higher speed. However, there is a problem in that it is difficult to make signal processing, such as an image compression process, be performed at a rate that keeps up with the data rate of an output from an image-capturing element.

For this reason, for a high-speed image-capturing apparatus of the related art, there have been proposed a method in which image-captured data output from an image-capturing element is temporarily stored in a semiconductor memory, image-captured data inside the semiconductor memory is read from an external control device (mainly a computer) after an image-capturing process is completed, and processing is performed, and a method in which, after the completion of an image-capturing process, image-captured data is read from the semiconductor memory at a data rate (corresponding to the normal video frame rate) corresponding to the processing performance of video signal processing to be performed at a later stage, an image signal process and an image compression process are performed thereon, and the image-captured data is recorded on a recording medium.

However, in the case of the configuration in which image-captured data is temporarily stored in a semiconductor memory in the manner described above, since the capacity of a semiconductor memory that can be installed in a high-speed image-capturing apparatus is limited, there is a problem in that the recording time period for continuous image capturing is limited. In order to overcome this problem, it is necessary to perform an image signal process and an image compression process on image-captured data output from an image-capturing element in real time and convert the image-captured data into a signal corresponding to the bit rate at which recording can be performed on a recording medium, such as a magnetic tape, an opto-magnetic disc, or a hard disk.

In recent years, as a compression method for realizing a high compression ratio, H.264 VIDEO CODEC has been used. However, at the present time, the processing of many high-compression-type compression methods, such as the above-described compression method [H.264 VIDEO CODEC], is complex and takes time. That is, the present situation is that a circuit and an LSI that realize a high-speed process that keeps up with a high-speed frame rate exceeding the normal video frame rate have not been realized.

In order to solve such a problem regarding the compression process speed, a method has been proposed in which a high-speed process is realized by spatially dividing an image of one frame into areas and by performing processing in parallel on each of the areas, and thus, image compression that keeps up with high-speed image capturing is realized. For example, in Japanese Unexamined Patent Application Publication No. 1-286586, an image-capturing apparatus that distributes output from a solid-state image-capturing element in units of horizontal lines and that performs parallel processing has been disclosed. In Japanese Unexamined Patent Application Publication No. 5-316402, an image-capturing apparatus that performs spectroscopy using a prism and that performs parallel processing on output signals of a plurality of solid-state image-capturing elements has been disclosed.

On the other hand, as an encoding method for realizing scalability in a time direction (frame rate), Scalable Video CODEC (SVC) has been proposed. In SVC disclosed in Heiko Schwarz, Detlev Marpe, and Thomas Wiegand, "MCTF and Scalability Extension of H.264/AVC", PCS '04, December 2004, and in J.Reichel and H.Schwarz, "Scalable Video Coding - Joint Scalable Video Model JSVM-2", JVT-0201, Apri. 2005, subband splitting in a time direction is performed, and each signal is encoded in a hierarchical manner, thereby realizing scalability in the time direction.

The above-described high-speed image-capturing apparatus of the related art has problems described below. It is possible for the image-capturing apparatus disclosed in Japanese Unexamined Patent Application Publication No. 1-286586 to record images at a high resolution and at a high frame rate for a long time by spatially dividing an image and by performing processing in parallel for the purpose of performing high-speed image processing. However, in the image-capturing apparatus disclosed in Japanese Unexamined Patent Application Publication No. 1-286586, a large-scale configuration in which a plurality of video tape recorders (VTR) are used to record signals there have been made parallel is formed. Furthermore, image compression has not particularly been mentioned.

In the image-capturing apparatus disclosed in Japanese Unexamined Patent Application Publication No. 5-316402, by shifting the phase of incident light that is subjected to spectroscopy using a prism with respect to time by using a plurality of image-capturing elements and performing image capturing, and by processing the obtained signals in parallel, image capturing at a high resolution and at a high frame rate is realized. However, in the image-capturing apparatus disclosed in Japanese Unexamined Patent Application Publication No. 5-316402, no particular mention is made of image compression, and a configuration in which recording is performed in a semiconductor memory is formed. If the configuration is formed in such a manner that image signals that are parallelized in a time-division manner are to be compressed, it is necessary to have a plurality of image compression devices, and a substantial increase in costs is incurred.

In the encoding method disclosed in Heiko Schwarz, Detlev Marpe, and Thomas Wiegand, "MCTF and Scalability Extension of H.264/AVC", PCS '04, December 2004, and in J.Reichel and H.Schwarz, "Scalable Video Coding - Joint Scalable Video Model JSVM-2", JVT-O201, Apri. 2005, each subband-divided hierarchy is compressed by the same encoding process. With such a configuration, in a case where there are a plurality of encoding processors having improved compression efficiency, a substantial increase in costs is incurred, whereas in the case of a configuration using a low-cost encoding processor, it is difficult to increase compression efficiency.

It is desirable to provide an image processing apparatus that solves the above-described problems, that realizes recording of images at a high resolution and at a high frame rate for a long time without substantial increase in costs, and that includes an image compression unit that realizes having scalability of a frame rate at reproduction and output time, an image processing method therefor, and a program therefor.

The article: "Architectures of Incorporating MPEG-4 Avc into Three-dimensional Subband Video Coding" by Xiangyang Ji et al., 24. Picture Coding Symposium; 15-12-2004 - 17-12-2004, San Francisco, discloses an image processing apparatus and method on which the pre-characterizing parts of the independent claims is based.

According to an embodiment of the present invention, there is provided an image processing apparatus as defined in claim 1.

The first encoding means may include encoding processing means having a compression efficiency higher than the second encoding means.

The second encoding means may include encoding processing means having a circuit scale smaller than the first encoding means.

The time subband splitting means may be a wavelet converter in the time direction, and may perform a process for dividing a frame signal into low-frequency components and high-frequency components by performing a Haar transform among a plurality of frames adjacent in the time direction.

The time subband splitting means may receive an image signal at P frames per second (P is an integer) as the image signal and may generate a lower-frequency subband split signal and a higher-frequency subband split signal, both at (P/Q) frames/second (Q is equal to a power of 2) by performing a subband splitting process in the time direction.

The first encoding means and the second encoding means may perform an encoding process at (P/Q) frames per second.

The image processing apparatus may further include recording means for recording lower frequency stream data output from the first encoding means and higher frequency stream data output from the second encoding means; first decoding means for receiving lower-frequency stream data recorded in the recording means and performing a process for decompressing low-frequency components; second decoding means for receiving higher-frequency stream data recorded in the recording means and performing a process for decompressing high-frequency components; and time subband combining means for generating a combined image signal at a frame rate higher than a frame rate of image signals, which are the decoding results of the first decoding means and the second decoding means, by performing a subband combining process in the time direction on the image signals, which are the decoding results of the first decoding means and the second decoding means.

The time subband combining means may be an inverse wavelet converter in the time direction.

The time subband splitting means may generate a plurality of higher frequency subband splitting signals as the higher frequency subband splitting signal, and wherein the frame rates of the lower frequency subband splitting signal and the plurality of higher frequency subband splitting signals may be frame rates that are determined in accordance with the total number of the lower frequency subband splitting signal and the plurality of higher frequency subband splitting signals.

The second encoding means may include a plurality of different encoding means for performing a compression process on each of the plurality of higher frequency subband splitting signals.

The time subband splitting means may generate one lower frequency subband splitting signal by performing a process for adding signal values of corresponding pixels of N ($N \geq 2$) image frames continuous with respect to time, which are contained in the image signal, and may generate N-1 higher frequency subband splitting signal by performing processes for adding and subtracting signals values of corresponding pixels of N ($N \geq 2$) image frames continuous with respect to time, which are contained in the image signal, and wherein each of the N-1 higher frequency subband splitting signals may be a signal that is calculated by differently setting a combination of image frames for which an addition process and a subtraction process are performed.

The image processing apparatus may further include an image-capturing element configured to obtain an image signal by photoelectric conversion, wherein the time subband splitting means generates a lower-frequency subband split signal at a frame rate lower than a frame rate of a signal from the image-capturing element and a higher-frequency subband split signal by performing a process on the image signal from the image-capturing element.

According to another embodiment of the present invention, there is provided an image processing apparatus as defined in claim 9.

The first decoding means may perform decoding of data encoded with a compression efficiency higher than that of the data to be decoded by the second decoding means.

The second decoding means may receive a plurality of different items of higher-frequency stream data recorded in the recording means and may generate a plurality of different image signals of high frequency components, and wherein the time subband combining means may receive an image signal that is a decoding result of the first decoding means and a plurality of different image signals that are decoding results of the second decoding means and may generate a combined image signal at a high frame rate by performing a subband combining process in the time direction.

The time subband combining means may generate a combined image signal at a frame rate determined in accordance with the total number of the image signal of low frequency components, which are generated by the first decoding means, and the image signals of high frequency components, which are generated by the second decoding means.

The second decoding means may include a plurality of different decoding means for performing a decompression process on each of a plurality of items of higher frequency stream data recorded in the recording means.

The present invention also provides corresponding image processing methods and a program for causing a computer to perform such information processing methods.

According to the embodiments of the present invention, there are provided two encoding means for receiving an image signal, which is an output signal of, for example, an image-capturing element, performing a subband splitting process in a time direction thereon, thereby generating a lower-frequency subband split signal at a frame rate lower than an input frame rate and a higher-frequency subband split signal, and compressing the generated lower-frequency subband split signal and higher-frequency subband split signal. A combination of encoding means having different compression efficiencies is formed, for example, the encoding means for the lower-frequency subband split signal is formed as, for example, an H.264 codec, the encoding means for the higher-frequency subband split signal is formed as, for example, a JPEG codec. With this configuration, in each encoding means, a real-time process for input data of a high frame rate, for example, image-captured data is implemented by an encoding process at a speed in accordance with a low frame rate.

Furthermore, in the apparatus according to the embodiments of the present invention, in decoding and reproduction of data on which different encoding processes have been performed, lower-frequency stream data and higher-frequency stream data are decoded by respective different decoding processing means, for example, lower-frequency stream data is subjected to a decoding process using an H.264 codec, and higher-frequency stream data is subjected to a decoding process using a JPEG codec. Then, the decoding results are combined and output as a video signal at a high frame rate. Alternatively, only the result of the decoding process for the lower-frequency stream data by the H.264 codec is output, making it possible to output a video signal at a low frame rate.

BRIEF DESCRIPTION OF THE DRAWINGS

Fig. 1 illustrates an exemplary configuration of an image-capturing apparatus according to an embodiment of the present invention;

Fig. 2 illustrates exemplary data processing of the image-capturing apparatus according to the embodiment of the present invention;

Fig. 3 illustrates exemplary data processing of the image-capturing apparatus according to the embodiment of the present invention;

Fig. 4 illustrates exemplary data processing of the image-capturing apparatus according to the embodiment of the present invention;

Fig. 5 illustrates exemplary data processing of the image-capturing apparatus according to the embodiment of the present invention;

Fig. 6 illustrates an exemplary configuration of an image-capturing apparatus according to an embodiment of the present invention;

Fig. 7 illustrates an exemplary configuration of an image-capturing apparatus according to an embodiment of the present invention;

Fig. 8 illustrates a configuration of an image-capturing apparatus not according to the present invention;

Fig. 9 illustrates an exemplary configuration of an image-capturing apparatus according to an embodiment of the present invention;

Fig. 10 illustrates an exemplary configuration of an image-capturing apparatus according to an embodiment of the present invention;

Fig. 11 illustrates an example of the configuration of an image-capturing apparatus according to an embodiment of the present invention;

Fig. 12 illustrates an example of data processing of an image-capturing apparatus according to an embodiment of the present invention;

Fig. 13 illustrates an example of data processing of an image-capturing apparatus according to an embodiment of the present invention;

Fig. 14 illustrates an example of data processing of an image-capturing apparatus according to an embodiment of the present invention; and

Fig. 15 illustrates an example of a data process sequence for image data stored in a frame memory.

## DESCRIPTION OF THE PREFERRED EMBODIMENTS

With reference to the figures, a description will be given below of the details of an image processing apparatus, an image processing method, and a program according to embodiments of the present invention. The description will be given in the order of the following items.

A. Example of Configuration for Performing Processing on Image-Captured Data of High-speed (Two Times) Frame Rate

B. Another Embodiment for Performing Processing on Image-Captured Data of High-Speed (Two Times) Frame Rate

C. Example of Configuration for Performing Processing on Image-Captured Data of High-Speed (N times) Frame Rate

A. Example of Configuration for Performing Processing on Image-Captured Data of High-speed (Two Times) Frame Rate

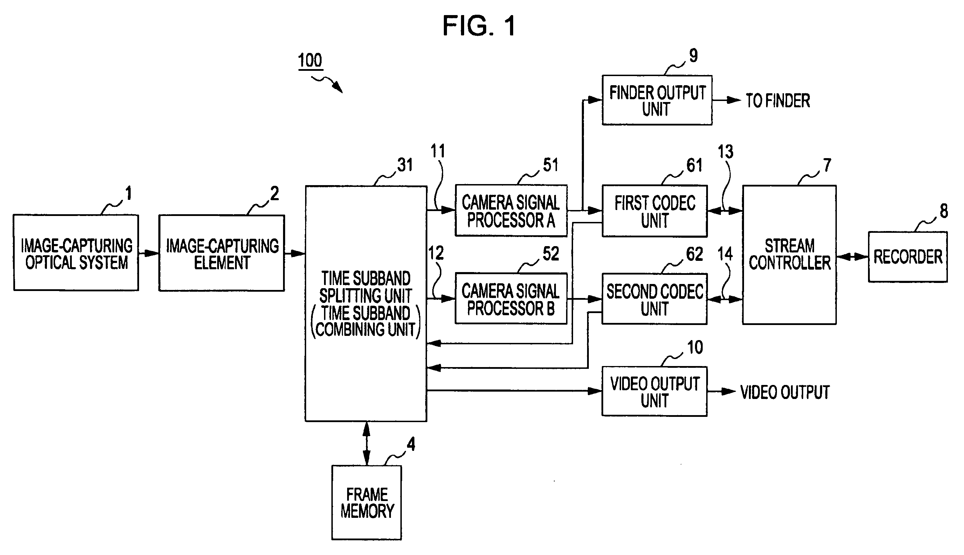

Fig. 1 shows the configuration of an image-capturing apparatus according to an embodiment of an information processing apparatus of the present invention. The image-capturing apparatus is an apparatus that realizes image capturing, processing, and recording at a frame rate two times a normal video rate.

First, operations during image capturing will be described with reference to the figures. An image-capturing apparatus 100 receives light that enters via an image-capturing optical system 1 by using an image-capturing element 2. The image-capturing element 2 is a solid-state image-capturing element, for example, a CMOS solid-state image-capturing element, which is capable of performing image capturing at a high resolution (set at an HD (High Definition) resolution in the present embodiment) and at a high frame rate (set at 120 frames per second in the present embodiment), and outputs image-captured data that is digitally converted via an AD converter (not shown). Here, the AD converter is mounted in the CMOS solid-state image-capturing element or arranged outside the solid-state image-capturing element. Furthermore, in the present embodiment, the image-capturing element 2 is a solid-state image-capturing element of a single-plate color method having a color filter that allows light to be transmitted through a wavelength range that differs for each pixel on the light-receiving surface.

Image-captured data output from the image-capturing element 2 is input to a time subband splitting unit 31. The time subband splitting unit 31 temporarily stores the image-captured data of the current frame, which is supplied from the image-capturing element 2, in a frame memory 4, and at the same time reads the image-captured data of the previous two frames from the frame memory 4, performs a subband splitting process in accordance with Expressions 1 described below, and outputs a lower frequency signal 11 and a higher frequency signal 12.

$$O_L(x, y, 2t) = \frac{I(x, y, 2t) + I(x, y, 2t+1)}{2}$$

$$O_H(x, y, 2t) = \frac{I(x, y, 2t) - I(x, y, 2t+1)}{2} + \frac{Range}{2}$$

(Expressions 1)

Expressions 1 above represent wavelet transforms in a time direction, in which a Haar function is used as a base. In the above expressions, the following values are shown:

(x, y, 2t): input value at pixel position (x, y) at time 2t
I(x, y, 2t+1): input value at pixel position (x, y) at time 2t+1
$O_L$(x, y, 2t): low-frequency signal output value at pixel position (x, y) at time 2t
$O_H$(x, y, 2t): high-frequency signal output value at pixel position (x, y) at time 2t
Range: number of resolutions of pixel value of one pixel

The number of resolutions becomes 256 in the case that, for example, one pixel is represented with each color being 8 bits in the present embodiment, each color is described as 8 bits.

The low-frequency signal output value $O_L$(x, y, 2t) is generated by an addition process of corresponding pixel values of two consecutive input frames. The high-frequency signal output value $O_H$(x, y, 2t) is generated by a subtraction process of corresponding pixel values of two continuous input frames. That is, one low-frequency signal output value and one high-frequency signal output value are generated on the basis of the corresponding signal values of two frames that are continuous in the time direction. As a result of this process, the output frame rate becomes 1/2 with respect to the input frame rate. Expressions 2 shown below represent inverse wavelet transforms in which a Haar function is used as a base.

$$R(x, y, 2t) = O'_L(x, y, 2t) + O'_H(x, y, 2t) - \frac{Range}{2}$$

$$R(x, y, 2t + 1) = O'_L(x, y, 2t) - O'_H(x, y, 2t) - \frac{Range}{2}$$

(Expressions 2)

The inverse wavelet transforms shown in Expressions 2 above are expressions for computing, from the values $[O_L(x, y, 2t)]$ and $[O_H(x, y, 2t)]$ generated in the wavelet transforms shown in Expressions 1 described earlier, pixel values $[R(x, y, 2t)]$ and $[R(x, y, 2t+1)]$ of the corresponding pixel (x, y) of two consecutive frames corresponding to the original frame rate at times 2t and 2t+1. Expressions 2 are used for a decoding process.

In the embodiment, as a time subband splitting process in the time subband splitting unit 31, a Haar wavelet that can be easily installed is used. In addition, a wavelet transform in which another base is used, or another subband splitting process may be used.

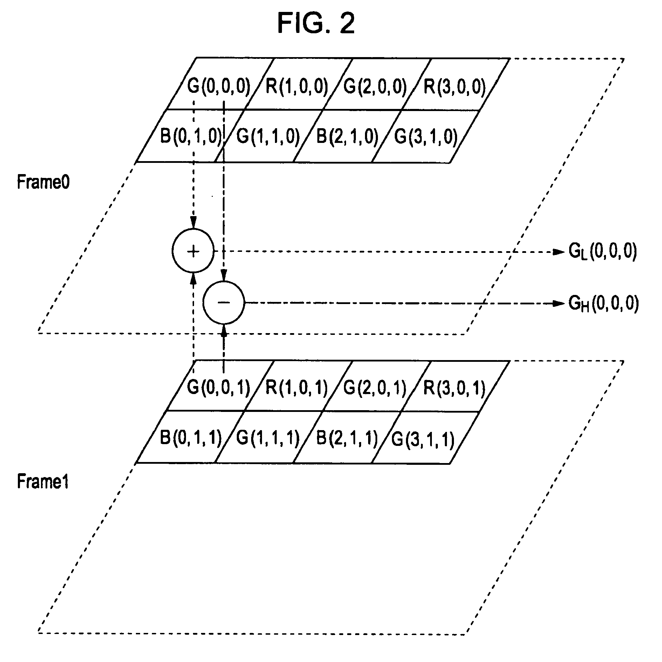

Fig. 2 shows the details of the time subband splitting process in the time subband splitting unit 31. In Fig. 2, image-captured data of the first frame (Frame 0) and the second frame (Frame 1), which are read from the frame memory 4, are shown. Each image-captured data frame has RAW data having a single color signal, namely, one color signal of one of RGB, for each pixel. For example, the upper left end of each frame indicates a G signal, each signal value is stored in the order of GRGR on the right side, and in the second row, signal values are stored in the order of BGBG. For example, regarding the G signal in the upper left end of each frame, the following values are shown:

G of G(0, 0, 0) is a G signal of an RGB signal,
the first (0, 0) of G(0, 0, 0) shows that the coordinate position (x, y) = (0, 0), and
the final (0) of G(0, 0, 0) shows that the frame ID = frame 0 .

The time subband splitting unit 31 performs an addition process and a subtraction process between pixels at the same position in terms of space in each frame. For example, between the pixel G(0, 0, 0) of the first frame (Frame 0) and the pixel G(0, 0, 1) of the second frame (Frame 1) shown in Fig. 2, the processing shown in Expressions 1 is performed, thereby computing a low-frequency signal output value $O_L$(x, y, 2t) by the addition process of corresponding pixel values of two consecutive input frames and generating a high-frequency signal output value $O_H$(x, y, 2t) by the subtraction process of corresponding pixel values of two consecutive input frames. In the following, according to which one of the signal values of RGB it is, $[O_L(x, y, 2t)]$ and $[O_H(x, y, 2t)]$ are denoted as $[R_L(x, y, 2t)]$ and $[R_H(x, y, 2t)]$ in the case of R,

$[G_L(x, y, 2t)]$ and $[G_H(x, y, 2t)]]$ in the case of G, and

$[B_L(x, y, 2t)]$ and $[B_H(x, y, 2t)]]$ in the case of B.

The time subband splitting unit 31 performs the processing shown in Expressions 1 between, for example, the pixel G(0, 0, 0) of the first frame (Frame 0) and the pixel G(0, 0, 1) of the second frame (Frame 1), which are shown in Fig. 2, so that a low-frequency signal output value $G_L(0, 0, 0)$ is generated by the addition process of corresponding pixel values of two consecutive input frames and a high-frequency signal output value $G_H(0, 0, 0)$ is generated by the subtraction process of corresponding pixel values of two continuous input frames. Similarly, processing is performed between a pixel R(1, 0, 0) and a pixel R(1, 0, 1), thereby outputting a low-frequency signal $R_L(1, 0, 0)$ and a high-frequency signal $R_H(1, 0, 0,)$.

In the manner described above, the low-frequency signal 11 converted by the time subband splitting unit 31 is obtained in such a manner that pixels of adjacent two frames of image-captured data are subjected to an addition process, and is equivalent to image-captured RAW data captured at a frame rate (60 frames per second) half of the image-capturing frame rate (120 frames per second in the present embodiment). On the other hand, the high-frequency signal 12 converted by the time subband splitting unit 31 is obtained by determining the difference between two adjacent frames of image-captured data, and is RAW data such that an effective pixel value exists in only the area of a moving subject and the other area is formed as a fixed value (a central value of 128 is assigned in view of installation) indicating that there is no difference. Furthermore, both the frame rates of the low-frequency signal 11 and the high-frequency signal 12 are 60 frames per second.

As described above, the time subband splitting unit 31 receives an image signal output from the image-capturing element 2, and generates, by a subband splitting process in the time direction, a lower-frequency subband split signal formed of low frequency components which are formed to be at a low frame rate lower than the input frame rate of a signal from the image-capturing element 2, and a higher-frequency subband split signal formed of high frequency components.

The low-frequency signal 11 output from the time subband splitting unit 31 is input to a camera signal processor A51. Similarly, the high-frequency signal 12 output from the time subband splitting unit 31 is input to a camera signal processor B52.

The camera signal processor A51 and the camera signal processor B52 perform camera signal processing, such as white balance correction, gain correction, demosaic processing, matrix processing, and gamma correction, on the low-frequency signal 11 and the high-frequency signal 12 that are output from the time subband splitting unit 31. The camera signal processor A51 and the camera signal processor B52 are processors that perform identical processing, and perform processing on the low-frequency signal 11 and the high-frequency signal 12 in parallel, respectively.

As stated above, the low-frequency signal 11 and the high-frequency signal 12 that are output from the time subband splitting unit 31 are data of 60 frames per second (60 f/s), the rate of which has been converted from a high-speed (120 f/s) frame rate, which is an image-capturing frame rate.

It is only necessary for the camera signal processor A51 and the camera signal processor B52 to perform signal processing on data of 60 frames per second (60 f/s). That is, it is possible to perform processing at a processing speed equal to that of image-captured RAW data of 60 frames per second.

The high-frequency signal 12 output from the time subband splitting unit 31 is RAW data representing the difference between two adjacent frames. Therefore, in a case where a non-linear process is performed in a demosaic process in the camera signal processor B52, there is a possibility that noise occurs in an edge portion or the like where a change in luminance occurs. In the case of the configuration of the image-capturing apparatus 100 according to the present embodiment, the camera signal processor A51 and the camera signal processor B52 can be realized by processing at the normal frame rate (60 frames per second), thereby presenting an advantage that speeding up is not necessary.

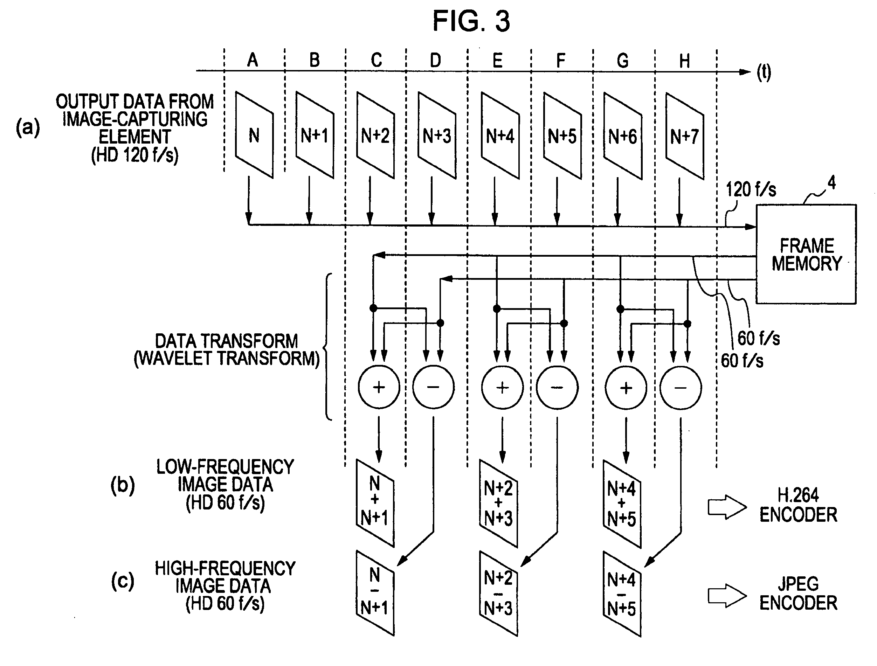

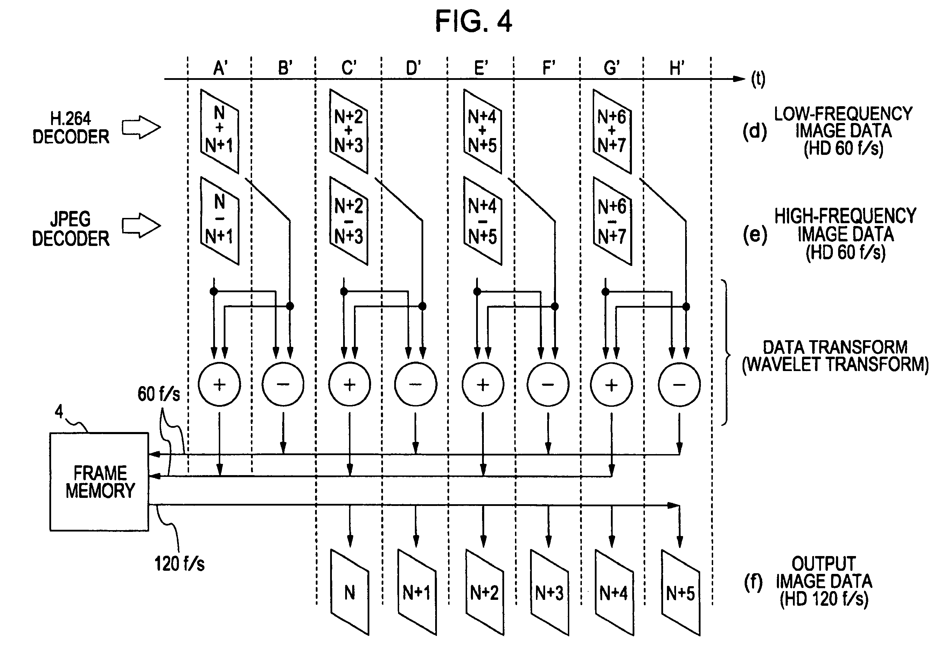

The camera signal processors 51 and 52 have been described as a configuration in which camera signal processing, such as white balance correction, gain correction, demosaic processing, matrix processing, and gamma correction, is performed on each of the low-frequency signal 11 and the high-frequency signal 12 output from the time subband splitting unit 31. However, the form of signal processing to be performed is not limited to this example, and various forms are possible. The details of processing in the time subband splitting unit 31 will be described later with reference to Figs. 3 and 4.

The lower frequency image data, which is output from the camera signal processor A51, is input to a first codec unit 61 and is also input to the finder output unit 9. On the other hand, the higher frequency image data, which is output from the camera signal processor B52, is input to a second codec unit 62.

The finder output unit 9 converts lower frequency image data, which is supplied from the camera signal processor A51, into a signal to be displayed on a viewfinder (not shown), and outputs it. When the image to be displayed on the viewfinder is compared with input image data, the resolution and the frame rate may differ. In such a case, the finder output unit 9 performs a resolution conversion process and a frame rate conversion process. When the frame-rate conversion process is to be performed, a frame memory (not shown) is used. Furthermore, an image to be displayed on the viewfinder may be necessary to be a luminance image. In such a case, the finder output unit 9 converts the input image into a luminance image and outputs it.

The first codec unit 61 compresses lower frequency image data, which is supplied from the camera signal processor A51, by using the first image codec, and outputs lower-frequency stream data 13. The first codec unit 61 is formed of an inter-frame codec of, for example, an H.264 codec method. As described above, lower frequency image data is equivalent to image-captured data of a frame rate (60 frames per second in the embodiment) half of the image-capturing frame rate.

The first codec unit 61 compresses lower frequency image data by assuming them to be moving image data at normal 60 frames per second in accordance with a standard specification, such as the H.264 High Profile specification. However, the first codec is not limited to the H.264 codec, and any method may be used as long as it compresses normal moving image data. For example, an inter-frame codec of MPEG-2, an intra-frame codec of Motion-JPEG, or a codec that performs processing in accordance with MPEG4 or an Advanced Video Codec High Definition (AVCHD) format may be used. Furthermore, stream data 13 output by the first codec unit 61 may not accord with a standard specification.

The second codec unit 62 compresses higher frequency image data, which is supplied from the camera signal processor B52, by the second image codec, and outputs higher-frequency stream data 14. The second codec is formed of, for example, an intra-frame codec of a JPEG codec method. As described above, higher frequency image data is obtained by determining the difference between two adjacent frames, and is moving image data such that an effective pixel value exists in only the area of the moving subject. That is, higher frequency image data is data such that there is no information (formed as a fixed value) in a portion where there is no time-related change, and in a portion where there is motion, data with a small amount of information exists in an area with a small luminance difference. Usually, such an image signal is easy to compress. Even if an inter-frame codec having a high compression efficiency, though the processing is complex and it has a high cost, is not used, compression to a sufficiently small amount of information is possible with an intra-frame codec, such as a JPEG codec having a low cost. Therefore, the second codec unit 62 compresses higher frequency image data for each frame by using a JPEG codec.

As described above, the first codec unit 61 can be set as compression processing means having a compression efficiency higher than that of the second codec unit 62, and the second codec unit 62 can be configured to have a compression efficiency lower than that of the first codec unit 61 and a circuit scale smaller than that of the first codec unit 61.

Many image-capturing apparatuses in recent years include a function of capturing a still image, and most of them include a JPEG codec for still images as a component. Therefore, in a case where the second codec unit 62 for compressing higher frequency image data is formed using a JPEG codec, there is an advantage of not necessitating an additional cost for the purpose of performing the compression of a high frame-rate image. However, the second codec is not limited to a JPEG codec, and any method may be used as long as it compresses normal image data. For example, an intra-frame codec of JPEG 2000 or an inter-frame codec of MPEG-2 may be used.

The stream data 13 and 14 output from the first codec unit 61 and the second codec unit 62 are input to the stream controller 7, respectively.

The stream controller 7 combines the stream data 13 in which lower frequency image data, which is input from the first codec unit 61, is compressed, and the stream data 14 in which higher frequency image data, which is input from the second codec unit 62, is compressed, and outputs the stream data to the recorder 8. As described above, the lower frequency stream data 13, which is supplied from the first codec unit 61, is data in which a moving image of 60 frames per second is compressed using an H.264 codec or the like, and is a stream in conformity with a standard specification.

On the other hand, the higher frequency stream data 14, which is supplied from the second codec unit 62, is data in which a difference image of 60 frames per second is compressed using a JPEG codec, and differs from a standard video stream. The stream controller 7 packetizes the stream data 14 supplied from the second codec unit 62, and superposes it as user data in the stream in conformity with a standard specification, which is supplied from the first codec unit 61.

That is, the stream data, as user data in which compressed higher frequency data, which is supplied from the second codec unit 62, is packetized, is superposed in the stream in conformity with a standard specification, which is supplied from the first codec unit 61. For decoding, a packet that is set as user data is separated, and processing is performed. This processing will be described later.

The combined stream data output from the stream controller 7 is input to the recorder 8.

The recorder 8 records the stream data in conformity with a standard specification, which is supplied from the stream controller 7, on a recording medium, such as a magnetic tape, an opto-magnetic disc, a hard disk, or a semiconductor memory.

As a result of the above-described operations, by using the first codec having a superior compression efficiency and the second codec that can be implemented at a low cost, it is possible to compress an image signal captured at a frame rate (120 frames per second in the present embodiment) two times a normal frame rate at a speed that keeps up with the processing speed of the normal frame rate (60 frames per second in the present embodiment). Thus, an image-capturing apparatus that realizes image capturing, processing, and recording at a high frame rate while minimizing a cost increase is provided.

Next, a description will be given of operations during reproduction with reference to the figures. In order to reproduce only the recorded moving image, the image-capturing apparatus 100 reads stream data recorded in the recorder 8 as described above in accordance with the operation of the user. The stream data read from the recorder 8 is input to the stream controller 7.

The stream controller 7 receives the stream data supplied from the recorder 8, and separates it into lower-frequency stream data that is compressed by the first codec unit 61 and higher-frequency stream data that is compressed by the second codec unit 62. As described above, the stream data recorded in the recorder 8 is stream data in conformity with a standard specification in the compression method using the first codec unit 61, and the stream data compressed by the second codec unit 62 is packetized and superposed as user data.

The stream controller 7 extracts, from the stream data received from the recorder 8, data such that stream data that is superposed as user data and that is compressed by the second codec unit 62 is packetized, separates the data into the stream data 13 compressed by the first codec unit 61 and the stream data 14 compressed by the second codec unit 62, and outputs them to the first codec unit 61 and the second codec unit 62, respectively.

The first codec unit 61 receives the stream data 13 supplied from the stream controller 7, and performs decoding, namely, a decompression process. As described above, the first codec unit 61 is formed of, for example, an inter-frame codec of a H.264 codec method. Furthermore, the stream data 13 is a stream that is compressed in conformity with an standard specification, such H.264 High Profile, in the first codec unit 61. The first codec unit 61 decompresses the stream data 13 so as to be converted into lower frequency moving image data at 60 frames per second. As described above, since lower frequency moving image data is equivalent to image-captured data of 60 frames per second, the moving image data output from the first codec unit 61 is a moving image at normal 60 frames per second.

The second codec unit 62 receives the stream data 14 supplied from the stream controller 7 and performs a decompression process. As described above, the second codec unit 62 is formed of, for example, an intra-frame codec of a JPEG codec method. The second codec unit 62 decompresses the stream data 14 so as to be converted into higher frequency moving image data of 60 frames per second. As described above, since higher frequency moving image data is obtained by determining the difference between two adjacent frames of image-captured data, moving image data output from the second codec unit 62 is a time differential moving image of 60 frames per second.

Both the moving image data output from the first codec unit 61 and the second codec unit 62 are input to the time subband splitting unit 31. In this case, the time subband splitting unit functions as the time subband combining unit 31. That is, by receiving the decoding results of the first codec unit 61 and the second codec unit 62 and by performing a subband combining process in the time direction, a combined image signal that is formed to be at a frame rate higher than the frame rate of the image signal output by each codec is generated.

More specifically, the time subband splitting unit 31 performs an inverse transformation (inverse wavelet transform in the time direction) in accordance with Expressions 2 described above on lower frequency moving image data and higher frequency moving image data, which are supplied from the first codec unit 61 and the second codec unit 62, thereby generating odd-numbered frame images and even-numbered frame images at 120 frames per second. The time subband splitting unit 31 temporarily stores the odd-numbered frame images and the even-numbered frame images in the frame memory 4 and also alternately reads previous odd-numbered frames image and even-numbered frame images at a frame rate (120 frames per second) two times that. By performing such processing, it is possible to restore moving image data of 120 frames per second.

Furthermore, in a case where the operation of the user or information obtained from a connected image display device requests that a moving image at 60 frames per second be output, the time subband splitting unit 31 outputs, as is, the lower frequency moving image data, which is supplied from the first codec unit 61. As described above, since the moving image data output from the first codec unit 61 is a moving image that is generated by adding two adjacent frame images at 120 frames per second, it is equivalent to a moving image captured at 60 frames per second. In a case where such an operation is to be performed, it is possible for the controller (not shown) to control the second codec unit 62 so as not to be operated, and an operation with low power consumption is possible.

The moving image data output from the time subband splitting unit 31 is input to the video output unit 10.

The video output unit 10 outputs moving image data supplied from the time subband splitting unit 31 as video data of 120 frames per second. Video data to be output at this point may conform with a digital video signal format, such as the HDMI (High-Definition Multimedia Interface) standard or the DVI (Digital Visual Interface) standard, or may conform with an analog component signal format for use with a D terminal. The video output unit 10 performs a signal conversion process in accordance with the format of the output video signal.

As a result of the operations described above, it is possible to reproduce data such that an image signal captured at a frame rate (120 frames per second in the present embodiment) two times a normal frame rate is recorded and to decompress it by using the first codec having a superior compression efficiency and the second codec that can be implemented at a low cost. Thus, an image-capturing apparatus that realizes reproduction output of a high-frame-rate video image while minimizing a cost increase is provided.

Furthermore, as described above, in a case where a moving image is requested to be output at 60 frames per second according to information obtained from the connected image display device, lower frequency moving image data, which is supplied from the first codec unit 61, may be output as is. In this case, during reproduction, it is possible to stop the processing of the second codec, making it possible to reduce power consumption and realize video image output at a normal video frame rate.

A description will be given below, with reference to Figs. 3 to 5, of exemplary operations of a time subband splitting process and a codec process in the time subband splitting unit 31 in the present image-capturing apparatus.

The operations during image capturing will be described first with reference to Fig. 3. Fig. 3 shows a time subband splitting process in the time subband splitting unit 31 during image capturing, that is, processing for frames that are continuous in the time direction. Output data from an image-capturing element in part (a) of Fig. 3 is an output of the image-capturing element 2 shown in Fig. 1. For this data, frame images (N to N+7 in the figure) of an HD resolution is output at a speed of 120 frames per second, where N is an arbitrary odd number.

The low-frequency image data in part (b) is lower frequency image data (60 frames per second in the present embodiment), which is generated by the time subband process in the time subband splitting unit 31 shown in Fig. 1 and which is output as a processed signal in the camera signal processor A51 and the first codec unit 61.

The high-frequency image data in part (c) is higher frequency image data (60 frames per second in the present embodiment), which is generated by the time subband process in the time subband splitting unit 31 shown in Fig. 1 and which is output as a processed signal in the camera signal processor B52 and the second codec unit 62.

The frame images output from the image-capturing element 2 are temporarily stored in the frame memory 4 in the time subband splitting unit 31. At this time, the speed of the storage in the frame memory 4 is 120 frames per second. The time subband splitting unit 31 stores the frame images in the frame memory 4 and at the same time reads previous odd-numbered frame images and even-numbered frame images, which have already been stored. At this time, the reading speed of both the odd-numbered frame images and even-numbered frame images from the frame memory 4 is 60 frames per second.

A description will be given below of specific exemplary operations of a process for generating (b) low-frequency image data and (c) high-frequency image data in the time subband splitting unit 31, which involves the control of the frame memory 4. When image capturing starts, in a period A shown in Fig. 3, the time subband splitting unit 31 receives a frame image N from the image-capturing element 2 and stores it in the frame memory 4. Next, in a period B, a frame image N+1 is input from the image-capturing element 2 and is stored in the frame memory 4.

In a period C, the time subband splitting unit 31 stores a frame image N+2 in the frame memory 4 and at the same time reads a frame image N and a frame image N+1 from the memory 4. At this time, since the reading speed is half of the storage speed (120 frames per second/2 = 60 frames/second in the present embodiment), only the upper half portion of the image area of the frame image N and that of the frame image N+1 are read.

In a period D, the time subband splitting unit 31 stores a frame image N+3 in the frame memory 4 and at the same time reads the remainder of the frame image N and the frame image N+1. In the period D, regarding the frame image N and the frame image N+1, only the lower half portions of the image areas are read.

Hereinafter, in a similar manner, in a period E, a frame image N+4 is stored, and also the upper half portions of the frame image N+2 and the frame image N+3 are read. In a period F, a frame image N+5 is stored, and also the lower half portions of the frame image N+2 and the frame image N+3 are read. In a period G, a frame image N+6 is stored, and also the upper half portions of the frame image N+4 and the frame image N+5 are read. In a period H, a frame image N+7 is stored, and also the lower half portions of the frame image N+4 and the frame image N+5 are read. In the manner described above, in the time subband splitting unit 31, a delay in an amount equal to two frames occurs.

The odd-numbered frame images (N, N+2, N+4, N+6 in the figure) and the even-numbered frame images (N+1, N+3, N+5, N+7 in the figure), which are read from the frame memory 4, are subjected to a transformation shown in Expressions 1 by the time subband splitting unit, so that they are divided into lower-frequency image data (for example, N + (N+1)) and higher-frequency image data (for example, N - (N+1)). Here, both the lower-frequency image data and the higher-frequency image data are moving image data of 60 frames per second.

The lower-frequency image data output from the time subband splitting unit 31, as described above, is processed by the camera signal processor A51 and then is subjected to a compression process in the first codec unit 61 (the H. 264 encoder in the figure). On the other hand, the higher-frequency image data output from the time subband splitting unit 31 is processed by the camera signal processor B52 in the manner described above and then is subjected to a compression process by the second codec unit 62 (the JPEG encoder in the figure).

Next, operations during reproduction will be described with reference to Fig. 4.

Fig. 4 shows operations for frames that are continuous in a time direction during reproduction.

The stream data read from the recorder 8 is separated into lower-frequency stream data and higher-frequency stream data in the stream controller 7, and they are subjected to a decompression process in the first codec unit 61 (the H.264 decoder in the figure) and the second codec unit 62 (the JPEG decoder in the figure), respectively. As a result of a decompression process being performed, lower-frequency image data is output from the first codec unit 61, and higher-frequency image data is output from the second codec unit 62. These items of image data are moving image data of 60 frames per second. These are (d) lower-frequency image data and (e) high-frequency image data shown in Fig. 4.

The image data output from the first codec unit 61 and the second codec unit 62 are input to the time subband splitting unit 31. In the time subband splitting unit 31, a transformation (inverse wavelet transform in which a Haar function is used as a base) shown in Expressions 2 above is performed thereon, so that the image data is transformed into odd-numbered frame images (N, N+2, N+4 in the figure) and even-numbered frame images (N+1, N+3, N+4 in the figure) in the moving image at 120 frames per second. The transformed odd-numbered frame images and even-numbered frame images are temporarily stored in the frame memory 4 in the time subband splitting unit 31.

At this time, the respective speeds of the storage in the frame memory 4 are 60 frames per second. The time subband splitting unit 31 stores the odd-numbered frame images and the even-numbered frame images in the frame memory 4 and also, reads previous frame images that have already been stored. At this time, the speed of reading of frame images from the frame memory 4 is 120 frames per second.

Operations regarding the control of the frame memory will be described below specifically.

When reproduction starts, in a period A', an inverse transformation is performed on the upper half portion of each of the image area of the lower-frequency image (N + (N+1)) and the higher-frequency image (N - (N+1)), so that the upper half portions of the frame image N and the frame image N+1 are generated. The time subband splitting unit 31 stores the upper half portions of the frame image N and the frame image N+1 in the frame memory 4 at the same time.

Next, in a period B', an inverse transformation is performed on the lower half portions of the image area of the lower-frequency image (N + (N+1)) and the higher-frequency image (N - (N+1)), so that the lower half portions of the frame image N and the frame image N+1 are generated. The time subband splitting unit 31 stores the lower half portions of the frame image N and the frame image N+1 in the frame memory 4 at the same time.

In a period C', an inverse transformation is performed on the upper half portions of the lower-frequency image ((N+2) + (N+3)) and the higher-frequency images ((N+2) - (N+3)), so that the upper half portions of the frame image N+2 and the frame image N+3 are generated. The time subband splitting unit 31 stores the upper half portions of the frame image N+2 and the frame image N+3 in the frame memory 4, and at the same time reads the frame image N.

In a period D', an inverse transformation is performed on the lower half portion of each of a lower-frequency image ((N+2) + (N+3)) and a higher-frequency image ((N+2) - (N+3)), so that the lower half portions of the frame image N+2 and the frame image N+3 are generated. The time subband splitting unit 31 stores the lower half portions of the frame image N+2 and the frame image N+3 in the frame memory 4, and at the same time reads the frame image N+1.

Hereinafter, in a similar manner, in a period E', the upper half portions of the frame image N+4 and the frame image N+5 are generated from the lower-frequency image ((N+4) + (N+5)) and the higher-frequency image ((N+4) - (N+5)) and stored in the frame memory 4, and also the frame image N+2 is read.

In a period F', the lower half portions of the frame image N+4 and the frame image N+5 are generated from the lower-frequency image ((N+4) + (N+5)) and the higher-frequency image ((N+4) - (N+5)) and stored in the frame memory 4, and also the frame image N+3 is read.

In a period G', the upper half portions of the frame image N+6 and the frame image N+7 are generated from the lower-frequency image ((N+6) + (N+7)) and the higher-frequency image ((N+6) - (N+7)) and stored in the in the frame memory 4, and also the frame image N+4 is read.

In a period H', the lower half portions of the frame image N+6 and the frame image N+7 are generated from the lower-frequency image ((N+6) + (N+7)) and the higher-frequency image ((N+6) - (N+7)) and stored in the frame memory 4, and also the frame image N+5 is read.

In the manner described above, regarding the image data output from the time subband splitting unit 31, a delay in an amount equal to two frames occurs. Furthermore, as a result of performing operations shown in Fig. 4, the image-capturing apparatus 100 realizes moving image output at 120 frames per second.

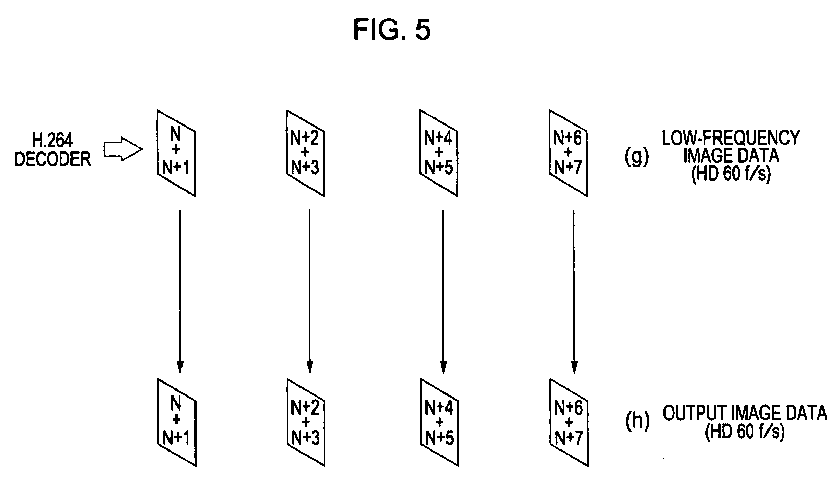

Next, a description will be given, with reference to Fig. 5, of operations at 60 frames per second during reproduction. As described earlier, in a case where a moving image is requested to be output at 60 frames per second according to the operation of a user or information obtained from a connected image display device, the time subband splitting unit 31 outputs, as is, the lower frequency moving image data, which is supplied from the first codec unit 61. Since the moving image data output from the first codec unit 61 is a moving image that is generated by adding two adjacent frame images at 120 frames per second, it is equivalent to a moving image captured at 60 frames per second. In a case where such operations are to be performed, it is possible to perform control so that the second codec unit 62 does not operate, and operations with low power consumption are possible.

Fig. 5 shows operations for frames that are continuous in a time direction at 60 frames per second during reproduction. As described above, since the lower frequency image data is equivalent to image-captured data of 60 frames per second, during reproduction at 60 frames per second, only the lower frequency image data are processed and output as is.

Regarding the stream data read from the recorder 8, only the lower-frequency stream data is extracted by the stream controller 7, and is subjected to a decompression process in the first codec unit 61 (an H.264 decoder in the figure). As a result of the decompression process being performed, lower-frequency image data is output from the first codec unit 61. This is (g) lower-frequency image data shown in Fig. 5.

The lower-frequency image data (for example, (N + (N+1))) in part (g) of Fig. 5, which is output from the first codec unit 61 is, as described above, normal moving image data of 60 frames per second. Therefore, the time subband splitting unit 31 skips processing, that is, does not particularly perform processing, and supplies, as is, the lower-frequency image data in part (g) of Fig. 5, which is output from the first codec unit 61, to the video output unit 10 of the block diagram shown in Fig. 1. In the manner described above, the image-capturing apparatus 100 easily realizes moving image output at a normal frame rate (60 frames per second in the present embodiment) from the stream data that has been captured and compressed at a frame rate (120 frames per second in the present embodiment) two times a normal frame rate.

As described above, in this processing, control can be performed so that the second codec unit 62 does not operate and thus, operations with low power consumption are possible.

B. Another Embodiment for Performing Processing on Image-Captured Data of High-Speed (Two Times) Frame Rate

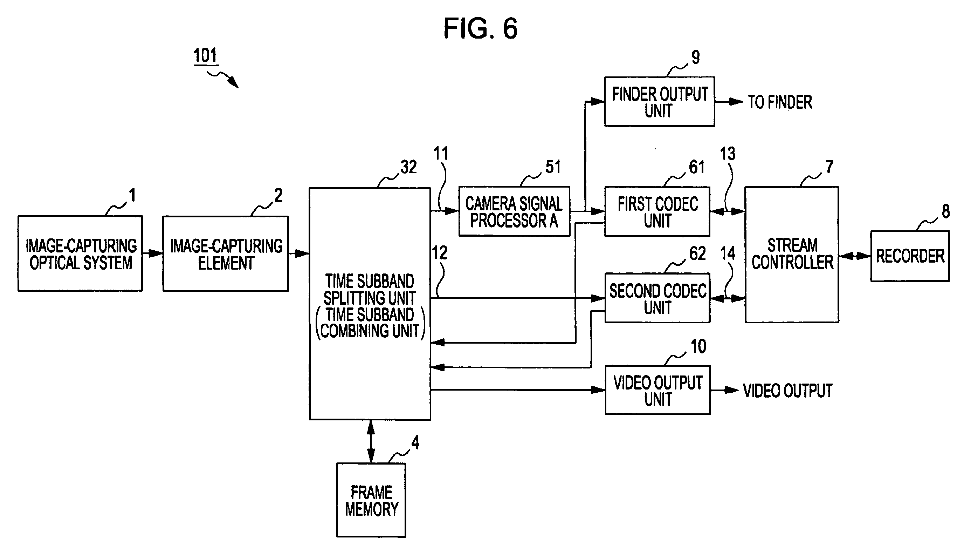

Next, a description will be given, with reference to Figs. 6 to 10, of embodiments having a configuration differing from the image-capturing apparatus described with reference to Fig. 1.

Fig. 6 shows another embodiment of the image-capturing apparatus according to the present invention. An image-capturing apparatus 101 shown in Fig. 6 differs from the image-capturing apparatus 100 described with reference to Fig. 1 in that the camera signal processor B52 does not exist.

In the present embodiment, in the time subband splitting unit 32, only the gamma correction process is performed on the high-frequency signal 12 output from the time subband splitting unit 32, and the high-frequency signal 12 is input to the second codec unit 62 without performing a camera signal process thereon. As described above, the high-frequency signal 12 has information in only the area where there is motion with respect to time, and the other area has a fixed value. Therefore, even if image compression is performed while the data is maintained as RAW data, the compression efficiency is not greatly affected.

During reproduction, the image-capturing apparatus 101 performs, in the time subband splitting unit 32, an inverse transformation in accordance with Expressions 2 on lower frequency image data, which is output from the first codec unit 61, and higher frequency RAW data, which is output from the second codec unit 62, and performs video output. At this time, the higher frequency RAW data is data in which only the color signal of one of R (red), G (green), and B (blue) exists. As a consequence, if an inverse transformation is performed while the signal is maintained as a color signal in which the luminance value is zero, the luminance value after the conversion becomes invalid. For this reason, the time subband splitting unit 32 fills the lost color signal with a fixed value (128 in the present embodiment) indicating a difference of zero, or performs a linear interpolation process from surrounding pixels thereon.

Originally, since an image compression process of a JPEG codec or the like is a compression technique suitable for use with image data on which a demosaic process has been performed, if compression is performed while the data is maintained as RAW data, there is a possibility that, for example, noise may occur in an edge portion of an image. In the case of the configuration of the image-capturing apparatus 101 according to the present embodiment, it is not necessary to provide a plurality of camera signal processors, and image compression processes can be implemented with processes at a normal frame rate (60 frames per second). As a consequence, there are advantages that speeding up is not necessary and the cost can be decreased.

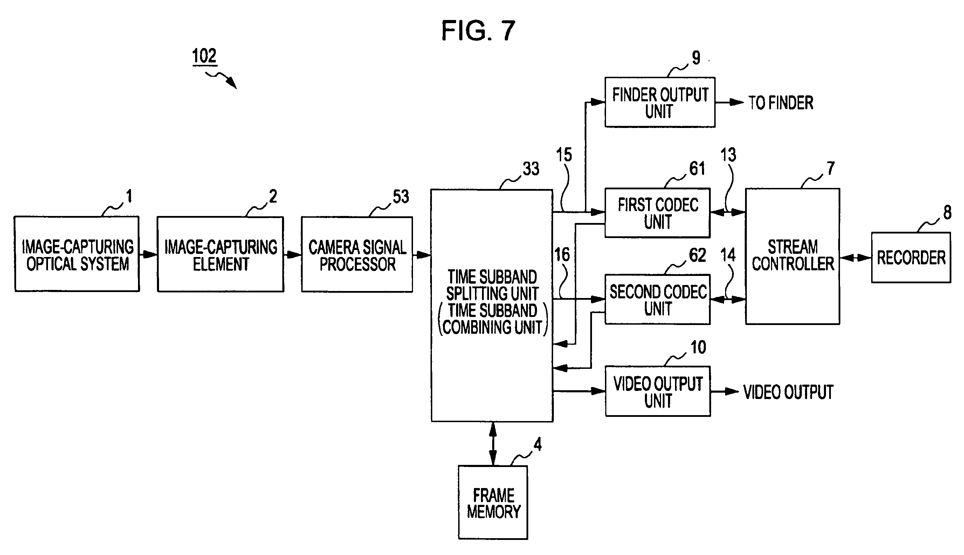

Fig. 7 shows still another embodiment of the image-capturing apparatus according to the present invention. An image-capturing apparatus 102 shown in Fig. 7 differs from the image-capturing apparatus 100 described with reference to Fig. 1 in that a camera signal processor 53 is arranged at a stage preceding to the time subband splitting unit 33.

In the present embodiment, initially, an image-capturing signal at 120 frames per second, which is output from the image-capturing element 2, is subjected to camera signal processing, such as white balance correction, gain correction, demosaic processing, matrix processing, and gamma correction in the camera signal processor 53. The signal output from the camera signal processor 53 is formed to be moving image data of 120 frames per second.

The time subband splitting unit 33 receives the moving image data output from the camera signal processor 53, performs a transformation in accordance with Expressions 1 described above, and divides it into lower frequency image data 15 and higher frequency image data 16. Unlike the time subband splitting unit 31 in the image-capturing apparatus 100, the time subband splitting unit 33 performs processing between frame images in which color signals are fully collected for each pixel. Therefore, the lower frequency image data 15, which is output from the time subband splitting unit 33, is normal moving image data of 60 frames per second, and the higher frequency image data 16 is time differential moving image data of 60 frames per second.

Since the image-capturing apparatus 102 shown in Fig. 7 can perform camera signal processing on captured RAW data, it is possible to suppress an occurrence of artifact in terms of image quality. However, since it is necessary for the camera signal processing 53 to perform processing at a speed of 120 frames per second, a high-speed processor is necessary.

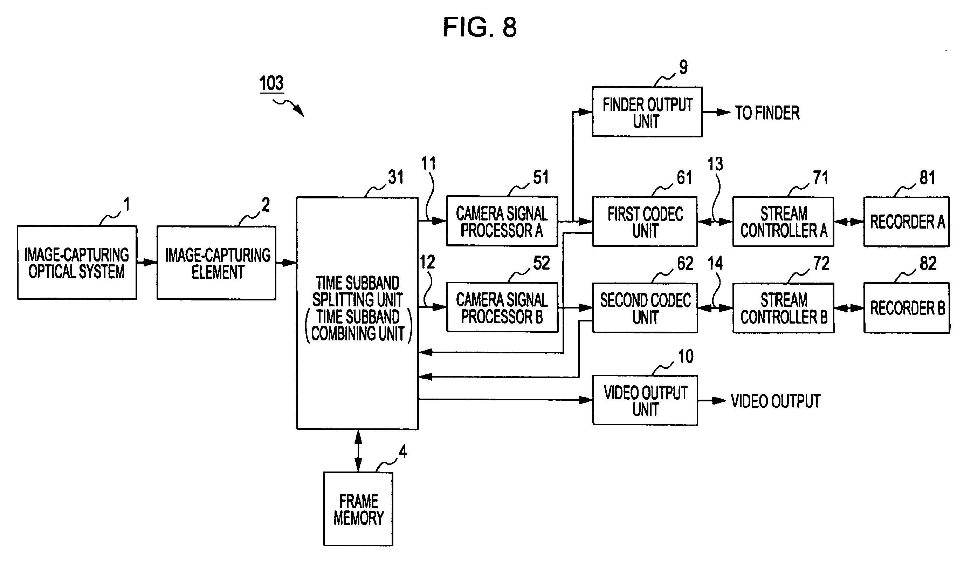

A description will be given below, with reference to Fig. 8, of an arrangement in which the configuration of the stream controller is different and not in accordance with the appended claims. Fig. 8 shows a different image-capturing apparatus. An image-capturing apparatus 103 shown in Fig. 8 differs from the image-capturing apparatus 100 described earlier with reference to Fig. 1 in that two systems of a stream controller and a recorder are provided.

In the present embodiment, the lower-frequency stream data 13 output from the first codec unit 61 is input to a stream controller A71. On the other hand, the higher- - frequency stream data 14 output from the second codec unit 62 is input to a stream controller B72.

The stream controller A71 controls the lower-frequency stream data 13 supplied from the first codec unit 61, converts it into a recordable signal, and then outputs the signal to a recorder A81. Here, as described above, the lower frequency stream data 13 is a stream in conformity with a standard specification of an H.264 codec or the like.

The stream controller B72 controls the higher-frequency stream data 14 supplied from the second codec unit 62, converts it into a recordable signal, and then outputs the signal into a recorder B82. Here, as described above, the higher frequency stream data 14 is a stream that is compressed by a JPEG codec or the like and that is not necessarily in conformity with a standard specification.

The recorder A81 records the lower-frequency stream supplied from the stream controller A71 on a recording medium, such as a magnetic tape, an opto-magnetic disc, a hard disk, or a semiconductor memory.

The recorder B82 records the higher-frequency stream from the stream controller B72 on a recording medium, such as a magnetic tape, an opto-magnetic disc, a hard disk, or a semiconductor memory.

Here, it is not necessarily necessary that recording media on which recording is performed by the recorder A81 and the recorder B82 be of the same type. For example, the recorder A81 may record lower frequency stream data on an opto-magnetic disc in accordance with a format in conformity with a standard specification, and the recorder B82 may record higher frequency stream data in a semiconductor memory in accordance with a dedicated format.

During reproduction, the image-capturing apparatus 103 shown in Fig. 8 inputs the lower-frequency stream data read from the recorder A81 to the stream controller A71. Furthermore, the image-capturing apparatus 103 inputs the higher-frequency stream data read from the recorder B82 to the stream controller B72.

The stream controller A71 inputs the lower-frequency stream supplied from the recorder A81 to the first codec unit 61. On the other hand, the stream controller B72 inputs the higher-frequency stream supplied from the recorder B82 to the second codec unit 62.

Here, when the image-capturing apparatus 103 shown in Fig. 8 is to perform reproduction at 60 frames per second, it is only necessary for the image-capturing apparatus 103 to control the recorder A81 so as to read lower frequency data, and the recorder B82 can be suspended. As a consequence, reduced power consumption is possible.

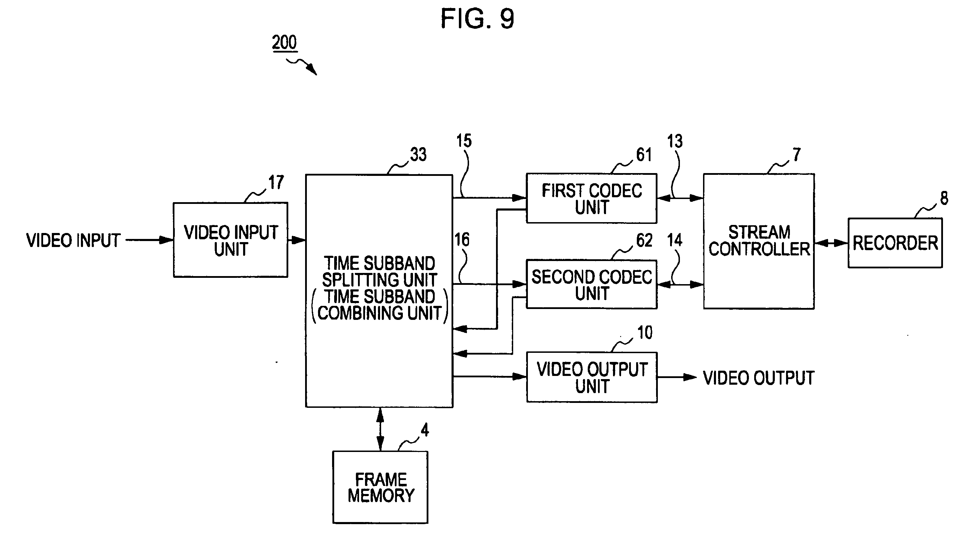

Next, a description will be given, with reference to Fig. 9, of an embodiment of an image recording device using an image compression process according to the present invention.

Fig. 9 shows an embodiment of an image recording device. An image recording device 200 shown in Fig. 9 is an exemplary configuration as an image recording device configured in such a manner that the image-capturing function is omitted from the image-capturing apparatus 102 described with reference to Fig. 7 and a video input unit 17 is provided. That is, the image-capturing optical system 1, the image-capturing element 2, and the camera signal processor 53 are deleted from the image-capturing apparatus 102 described with reference to Fig. 7 and instead, the video input unit 17 is provided.

The image recording device 200 shown in Fig. 9 receives, in the video input unit 17, a video signal supplied from an external video output device. At this time, the video signal to be received is moving image data at a rate (120 frames per second in the present embodiment) two times a normal video rate. Furthermore, the video signal format to be input may be in conformity with a digital video signal format, such as an HDMI standard or a DVI standard, or may be in conformity with an analog component signal format for use in a D terminal or the like. The video input unit 17 performs a signal conversion process in accordance with the input video signal format.

The image recording device 200 performs time subband splitting on the video signal received from the outside, and records stream data compressed by the first codec and the second codec. Furthermore, the image recording device 200 reproduces recorded stream data, performs a decompression process in the first codec and the second codec, and performs a transformation inverse to the time subband splitting, and then performs video output.

In a case where reproduction at 60 frames per second is to be performed, similarly to the image-capturing apparatus 100, only the first codec unit 61 is driven, and lower frequency image data is output as is.

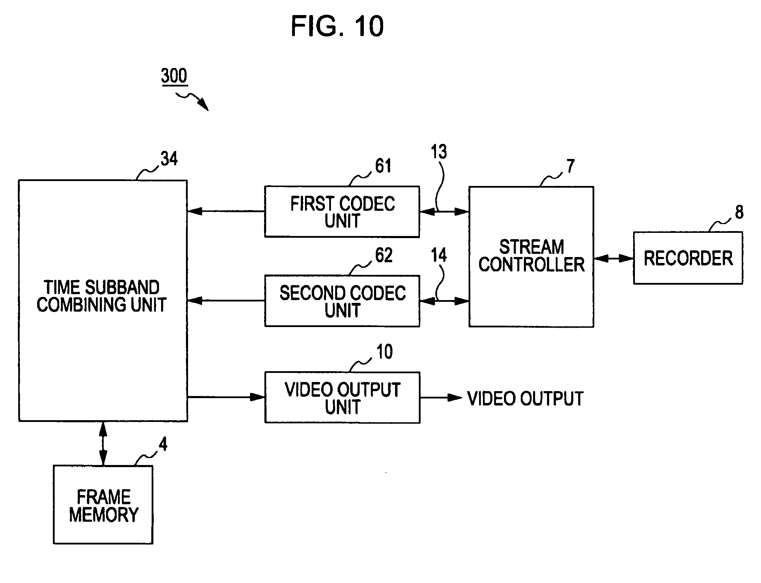

A description will be given below, with reference to Fig. 10, of an embodiment of an image reproduction device using an image compression process according to the present invention.

Fig. 10 shows an embodiment of an image reproduction device according to the present invention. An image reproduction device 300 shown in Fig. 10 is configured in such a manner that the video input unit 17 in the image recording device 200 described with reference to Fig. 9 is excluded, and only the reproduction operation is performed without performing a recording operation.

The image reproduction device 300 shown in Fig. 10 includes the recorder 8 from which a recording medium can be removed, so that a recording medium that has been recorded by an external image-capturing apparatus or image recording device is inserted thereinto and a stream recorded on the recording medium is reproduced. Here, stream data compressed by the image-capturing apparatuses 100 to 103 or the image recording device 200 according to the embodiments of the present invention has been recorded on the recording medium. The image reproduction device 300 performs a decompression process on the stream data reproduced from the recorder 8 in the first codec and the second codec, performs, in the time subband combining unit 34, a transformation inverse to the time subband splitting, and then performs video output.

Many recent image reproduction devices include a function of reproducing still images recorded on a recording medium, and most of them include a JPEG codec for still images as a component. Therefore, in a case where the second codec unit 62 for compressing higher frequency image data is to be formed by a JPEG codec, there is an advantage that no additional cost for performing high-frame-rate image capturing is necessary.

As described above, the image-capturing apparatus according to the embodiment of the present invention includes an image-capturing element for performing image capturing at a frame rate two times a normal video rate. By performing time subband splitting on image-captured data output from the image-capturing element, lower frequency moving image data is compressed by the first codec having a high compression efficiency, and higher frequency moving image data is compressed by the second codec that can be implemented at a low cost. Thus, it is possible to compress an image-capturing signal at a high frame rate and record it while suppressing a cost increase.

Furthermore, the image-capturing apparatus according to the embodiment of the present invention performs time subband splitting so that image-captured data is divided into lower frequency moving image data and higher frequency moving image data, and then processing is performed. As a result, since the lower frequency moving image data is equivalent to a moving image captured at a normal video rate (half of the image-capturing video rate), during reproduction, it is possible to easily realize moving image reproduction at the normal video rate by performing processing of only the lower frequency moving image.

In the present embodiment, the normal video rate is set at 60 frames per second, and the rate two times the normal video rate is set at 120 frames per second. However, the normal video rate is not limited to this, and as the normal video rate, a frame rate, such as 24 frames per second, 30 frames per second, or 50 frames per second, may be used.

C. Example of Configuration for Performing Processing on Image-Captured Data of High-Speed (N times) Frame Rate

In the embodiment described with reference to Fig. 1 to Fig. 10, a description has been given of an example of processing in which the normal frame rate is set as 60 frames per second and image data is captured at a frame rate two times, that is, at 120 frames per second.

In the image-capturing apparatus according to the embodiment of the present invention, processing for image data, in addition to captured image data at a normal two-times frame rate, captured at any multiple of the normal frame rate, that is, captured at an N-times frame rate, is possible. N is an integer of 2 or more. A description will be given below of the configuration of an image-capturing apparatus for performing processing on image data captured at an N-times frame rate, and an example of processing.

In the following, as an embodiment, a description will be given of an example in which N = 4. That is, this is an example in which processing for image data captured at a frame rate four times the normal video rate is performed. A description will be given of an example in which the normal frame rate is set as 60 frames per second, and processing for image data captured at a frame rate four times that, that is, at 240 frames per second, is performed.

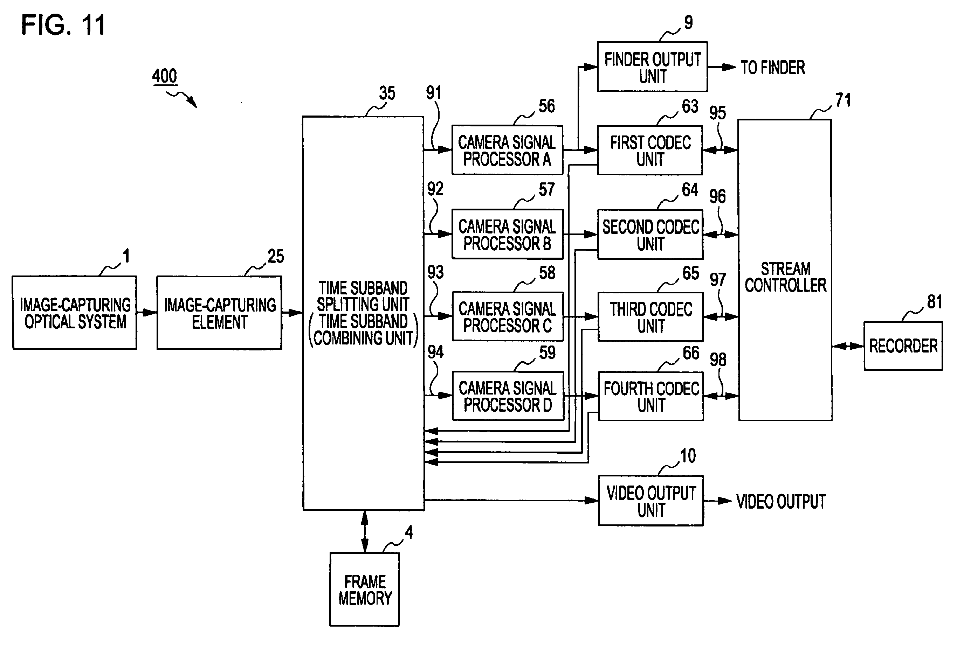

Fig. 11 shows an embodiment of an image-capturing apparatus according to the present invention. An image-capturing apparatus 400 shown in Fig. 11 is an apparatus for realizing image capturing, processing, and recording at a frame rate four times the normal video rate. A time subband splitting unit 35 of the image-capturing apparatus 400 performs processing for two hierarchs of the time subband splitting unit 31 of the image-capturing apparatus 100, which has been described earlier with reference to Fig. 1. That is, by using four consecutive frames of image data captured at 240 frames per second, four items of image data at 60 frames per second are generated and output.

First, operations during image capturing will be described. The image-capturing apparatus 400 receives, by using the image-capturing element 25, light that enters via the image-capturing optical system 1. The image-capturing element 25 is a solid-state image-capturing element, for example, a CMOS solid-state image-capturing element, which is capable of performing image capturing at a high resolution (assumed to be an HD (High Definition) resolution in the present embodiment) and at a high frame rate (assumed to be 240 frames per second in the present embodiment), and outputs digitally converted image-captured data via an AD converter (not shown). Here, the AD converter is mounted on the CMOS solid-state image-capturing element or arranged outside the solid-state image-capturing element. Furthermore, in the present embodiment, the image-capturing element 25 is a solid-state image-capturing element of a single-plate color method having color filters that allow light to be transmitted through a wavelength range different for each pixel on the light-receiving surface.

The image-captured data output from the image-capturing element 25 is input to the time subband splitting unit 35. The time subband splitting unit 35 temporarily stores the image-captured data at the current frame, which is supplied from the image-capturing element 25, in the frame memory 4, and also reads the image-captured data of the past four frames from the frame memory 4, performs a subband splitting process in accordance with Expressions 3 described below, and outputs a low-frequency LL signal 91, a high-frequency LH signal 92, a high-frequency HL signal 93, and a high-frequency HH signal 94.

$$O_{LL}(x,y,4t) = \frac{I(x,y,4t) + I(x,y,4t+1) + I(x,y,4t+2) + I(x,y,4t+3)}{4}$$

$$O_{LH}(x,y,4t) = \frac{I(x,y,4t) + I(x,y,4t+1) - I(x,y,4t+2) - I(x,y,4t+3)}{4} + \frac{Range}{2}$$

$$O_{HL}(x,y,4t) = \frac{I(x,y,4t) - I(x,y,4t+1) + I(x,y,4t+2) - I(x,y,4t+3)}{4} + \frac{Range}{2}$$

$$O_{HH}(x,y,4t) = \frac{I(x,y,4t) - I(x,y,4t+1) - I(x,y,4t+2) + I(x,y,4t+3)}{4} + \frac{Range}{2}$$

(Expressions 3)

The above Expressions 3 represent wavelet transforms in a time direction, in which a Haar function is used as a base. In the above Expressions, the following values are shown:

I(x, y, 4t): input value at pixel position (x, y) at time 4t,
I(x, y, 4t+1): input value at pixel position (x, y) at time 4t+1,
I(x, y, 4t+2): input value at pixel position (x, y) at time 4t+2,
I(x, y, 4t+3): input value at pixel position (x, y) at time 4t+3,
$O_{LL}$(x, y, 4t): low-frequency LL signal output value at pixel position (x, y) at time 4t,
$O_{LH}$(x, y, 4t): high-frequency LH signal output value at pixel position (x, y) at time 4t,
$O_{HL}$(x, y, 4t): high-frequency HL signal output value at pixel position (x, y) at time 4t,
$O_{HH}$(x, y, 4t): high-frequency HH signal output value at pixel position (x, y) at time 4t, and
Range: number of resolutions of pixel value of one pixel.

The number of resolutions is 256 in the case that, for example, one pixel is represented using 8 bits for each color. In the present embodiment, each color is described as being 8 bits.
The low-frequency LL signal output value $O_{LL}$(x, y, 4t) is generated by a process for adding corresponding pixel values of four consecutive input frames. The other three high-frequency signal output values, that is, the following high-frequency signal output values:

the high-frequency LH signal output value $O_{LH}$(x, y, 4t),
the high-frequency HL signal output value $O_{HL}$(x, y, 4t), and
the high-frequency HH signal output value $O_{HH}$(x, y, 4t) are generated by addition/subtraction processing shown in Expressions 3 on the basis of the corresponding pixel values of the four consecutive input frames.

The high-frequency LH signal output value $O_{LH}$(x, y, 4t) is set in such a manner that the corresponding pixel values (signal values) of preceding two frames at times 4t and 4t+1 among the corresponding pixels of the four consecutive input frames are set as addition data and the corresponding pixel values of succeeding two frames at times 4t+2 and 4t+3 are set as subtraction data.
The high-frequency HL signal output value $O_{HL}$(x, y, 4t) is set in such a manner that the corresponding pixel values of two frames at times 4t and 4t+2 among the corresponding pixels of four consecutive input frames are set as addition data and the corresponding pixel values of two frames at times 9t+1 and 4t+3 are set as subtraction data.
The high-frequency HH signal output value $O_{HH}$(x, y, 4t) is set in such a manner that the corresponding pixel values of two frames at times 4t and 4t+3 among the corresponding pixels of four consecutive input frames are set as addition data and the corresponding pixel values of two frames at times 4t+1 and 4t+2 are set as subtraction data.

The time subband splitting unit 35 generates one low-frequency signal output value and three high-frequency signal output values on the basis of the signal values corresponding to four frames that are consecutive in the time direction as described above. As a result of this process, the output frame rate becomes 1/4 with respect to the input frame rate. Expressions 4 shown below represent inverse wavelet transforms in which a Haar function is used as a base.

$$R(x,y,4t) = O'_{LL}(x,y,4t) + O'_{LH}(x,y,4t) + O'_{HL}(x,y,4t) + O'_{HH}(x,y,4t) - \frac{3Range}{2}$$

$$R(x,y,4t+1) = O'_{LL}(x,y,4t) + O'_{LH}(x,y,4t) - O'_{HL}(x,y,4t) - O'_{HH}(x,y,4t) + \frac{Range}{2}$$

$$R(x,y,4t+2) = O'_{LL}(x,y,4t) - O'_{LH}(x,y,4t) + O'_{HL}(x,y,4t) - O'_{HH}(x,y,4t) + \frac{Range}{2}$$

$$R(x,y,4t+3) = O'_{LL}(x,y,4t) - O'_{LH}(x,y,4t) - O'_{HL}(x,y,4t) + O'_{HH}(x,y,4t) + \frac{Range}{2}$$

(Expressions 4)

The inverse wavelet transforms shown in Expressions 4 are expressions for computing, from values $[O_{LL}(x, y, 4t)]$, $[O_{LH}(x, y, 4t)]$ $[O_{HL}(x, y, 4t)]$, and $[O_{HH}(x, y, 9t)]$, which are generated in the wavelet transforms shown in Expressions 3 described earlier, pixel values $[R(x, y, 4t)]$, $[R(x, y, 4t+1)]$, $[R(x, y, 4t+2)]$, and $[R(x, y, 4t+3)]$ of corresponding pixels (x, y) of four consecutive frames at the original frame rate at times 4t, 4t+1, 4t+2, and 4t+3. The above Expressions 4 are used for a decoding process.

In the embodiment, in a time subband splitting process in the time subband splitting unit 35, a Haar wavelet that is easy to implement is used. A wavelet transform in which another base is used, and another subband splitting process may be used.

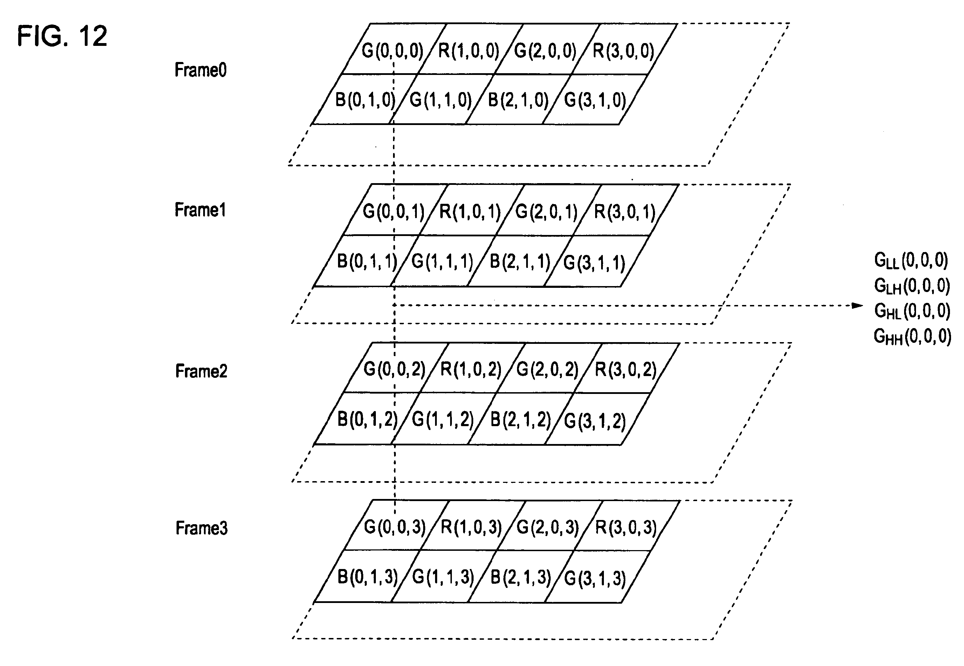

Fig. 12 shows the details of a time subband splitting process in the time subband splitting unit 35. Fig. 12 shows image-captured data of a first frame (Frame 0), a second frame (Frame 1), a third frame (Frame 2), and a fourth frame (Frame 3), which are read from the frame memory 4. Each image-captured data frame is RAW data having a single color signal, that is, one color signal of one of RGB, for each pixel. For example, the left upper end of each frame is a G signal, each signal value is stored in the order of GRGR on the right side, and the second row is stored with signal values in the order of BGBG. For example, regarding the G signal at the left upper end of each frame, the following values are shown:

G of G(0, 0, 0) is a G signal of an RGB signal,
the initial (0, 0) of G(0, 0, 0) is that the coordinate position (x, y) = (0, 0), and
the last (0) of G(0, 0, 0) is that frame ID = frame 0.

The time subband splitting unit 35 performs an addition process and a subtraction process between pixels positioned at the same position in terms of space in four consecutive frames. For example, processing shown in Expressions 3 is performed among the pixel G(0, 0, 0) of the first frame, the pixel G(0, 0, 1) of the second frame, the pixel G(0, 0, 2) of the third frame, and the pixel G(0, 0, 3) of the fourth frame, which are shown in Fig. 12. The process for adding corresponding pixel values of four consecutive input frames computes a low-frequency signal output value $O_{LL}$ (x, y, 4t). The process for adding and subtracting the corresponding pixel values of four consecutive input frames generates three signals, that is, a high-frequency signal output value $O_{LH}(x, y, 4t)$, a high-frequency signal output value $O_{HL}(x, y, 4t)$, and a high-frequency signal output value $O_{HH}(x, y, 4t)$ .

In the following, depending on which one of RGB the signal value is, $[O_{LL}(x, y, 4t)]$, $[O_{LH}(x, y, 4t)]$, $[O_{HL}(x, y, 4t)]$, and $[O_{HH}(x, y, 4t)]$ are represented
as $[R_{LL}(x, y, 4t)]$, $[R_{LH}(x, y, 4t)]$. $[R_{HL}(x, y, 4t)]$, and $[R_{HH}(x, y, 4t)]$ in the case of R,
as $[G_{LL}(x, y, 4t)]$, $[G_{LH}(x, y, 4t)]$, $[G_{HL}(x, y, 4t)]$, and $[G_{HH}(x, y, 4t)]$ in the case of G, and
as $[B_{LL}(x, y, 4t)]$, $[B_{LH}(x, y, 4t)]$, $[B_{HL}(x, y, 4t)]$, and $[B_{HH}(x, y, 4t)]$ in the case of B.

The time subband splitting unit 35, for example, performs processing shown in Expressions 3 among the pixel G(0, 0, 0) of the first frame (Frame 0), the pixel G(0, 0, 1) of the second frame (Frame 1), the pixel G(0, 0, 2) of the third frame, and the pixel G(0, 0, 3) of the fourth frame, which are shown in Fig. 12, and generates four output values.

That is, the process for adding the corresponding pixel values of four consecutive input frames generates the low-frequency signal output value $G_{LL}(0, 0, 0)$. Furthermore, the process for adding and subtracting the corresponding pixel values of four consecutive input frames generates the high-frequency signal output value $G_{LH}(0, 0, 0)$, the high-frequency signal output value $G_{HL}(0, 0, 0)$, and the high-frequency signal output value $G_{HH}(0, 0, 0)$.

In a similar manner, processing is performed among the pixel R(1, 0, 0), the pixel R(1, 0, 1), the pixel R(1, 0, 2), and the pixel R(1, 0, 3), thereby outputting a low-frequency signal $R_{LL}(1, 0, 0)$, and three signals, that is, a high-frequency signal $R_{LH}(1, 0, 0)$, a high-frequency signal $R_{HL}(1, 0, 0)$, and a high-frequency signal $R_{HH}(1, 0, 0)$.

A low-frequency signal 91 converted by the time subband splitting unit 35 is obtained by adding pixels of four adjacent frames of image-captured data, and corresponds to image-captured RAW data at a frame rate 1/4 (60 frames per second) of the image-capturing frame rate (240 frames per second in the present embodiment). On the other hand, high-frequency signals 92 to 94 converted by the time subband splitting unit 35 are obtained by determining the difference between four adjacent frames of the image-captured data, and are RAW data that becomes a fixed value (a central value 128 is assigned in terms of mounting) indicating that an effective pixel value exists in only the area of a moving subject and there is no difference in the other area. The frame rate of each of the low-frequency signal 91 and the high-frequency signals 92 to 94 is 60 frames per second.

The time subband splitting means 35 receives an image signal output from the image-capturing element 25, and performs a subband splitting process in the time direction, thereby generating a lower frequency subband splitting signal formed of low-frequency components, which is made to be at a frame rate lower than the input frame rate of a signal from the image-capturing element 25, and a plurality of higher frequency subband splitting signals formed of high frequency components.

As described above, the time subband splitting means 35 according to the present embodiment generates a plurality of higher frequency subband splitting signals as higher frequency subband splitting signals. The frame rate of each of the lower frequency subband splitting signal and the plurality of higher frequency subband splitting signals generated by the time subband splitting means 35 is determined in accordance with the total number of the lower frequency subband splitting signal and the plurality of higher frequency subband splitting signals.

The low-frequency signal 91 (the low-frequency signal $O_{LL}$) output from the time subband splitting unit 35 is input to the camera signal processor A56. In a similar manner, the high-frequency signal 92 (the high-frequency signal $O_{LH}$) output from the time subband splitting unit 35 is input to the camera signal processor B57. The high-frequency signal 93 (the high-frequency signal $O_{HL}$) therefrom is input to the camera signal processor C58. The high-frequency signal 94 (the high-frequency signal $O_{HH}$) therefrom is input to the camera signal processor D59.

The camera signal processors A56, B57, and C58, and D59 perform camera signal processing, such as white-balance correction, gain correction, demosaic processing, matrix processing, and gamma correction, on the low-frequency signal 91 and the high-frequency signals 92 to 94, which are output from the time subband splitting unit 35. The camera signal processor A56 and the camera signal processors B57 to D59 are processors that perform identical processing, and perform processing in parallel on the low-frequency signal 91 and the high-frequency signals 92 to 94, respectively.

As described above, the low-frequency signal 91 and the high-frequency signals 92 to 94, which are output from the time subband splitting unit 35, are data at 60 frames per second (60 f/s), which are rate-converted from the high-speed (240 f/s) frame rate that is an image-capturing frame rate.

The camera signal processor A56 and the camera signal processors B57 to D59 should perform signal processing for data at 60 frames per second (60 f/s). That is, it is possible to perform processing at a processing speed equal to that for the image-captured RAW data at 60 frames per second.

The high-frequency signals 92 to 94 output from the time subband splitting unit 35 are RAW data indicating a difference between four adjacent frames. As a consequence, in a case where a non-linear process is performed in a demosaic process in the camera signal processors B57 to D59, there is a possibility that noise may occur in an edge portion where the luminance changes. However, in the case of the configuration of the image-capturing apparatus 400 according to the present embodiment, since the camera signal processor A56 and the camera signal processors B57 to D59 can be implemented by processing at the normal frame rate (60 frames per second), there is a merit that speeding up is not necessary.

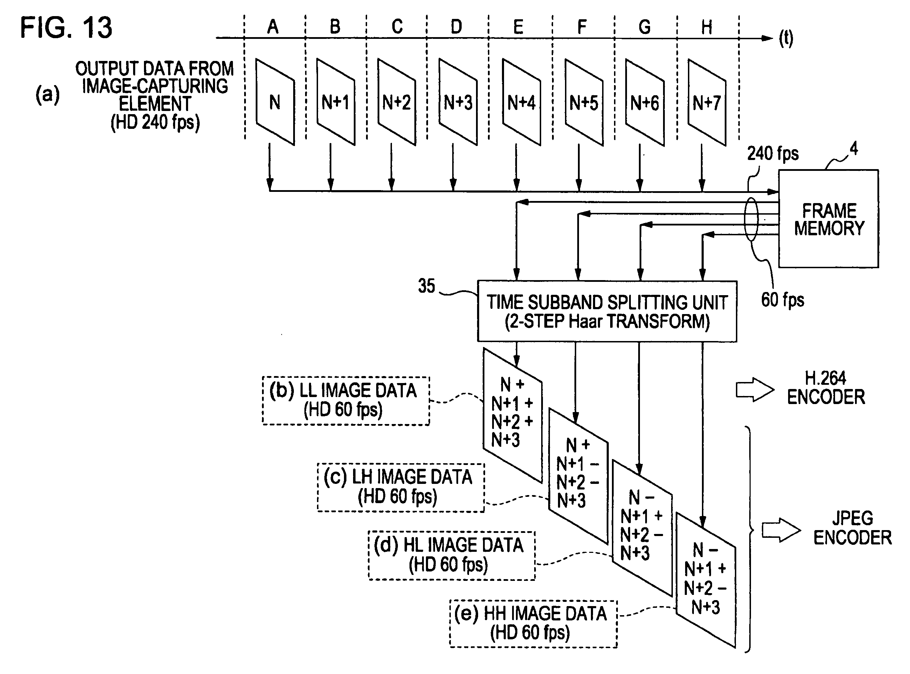

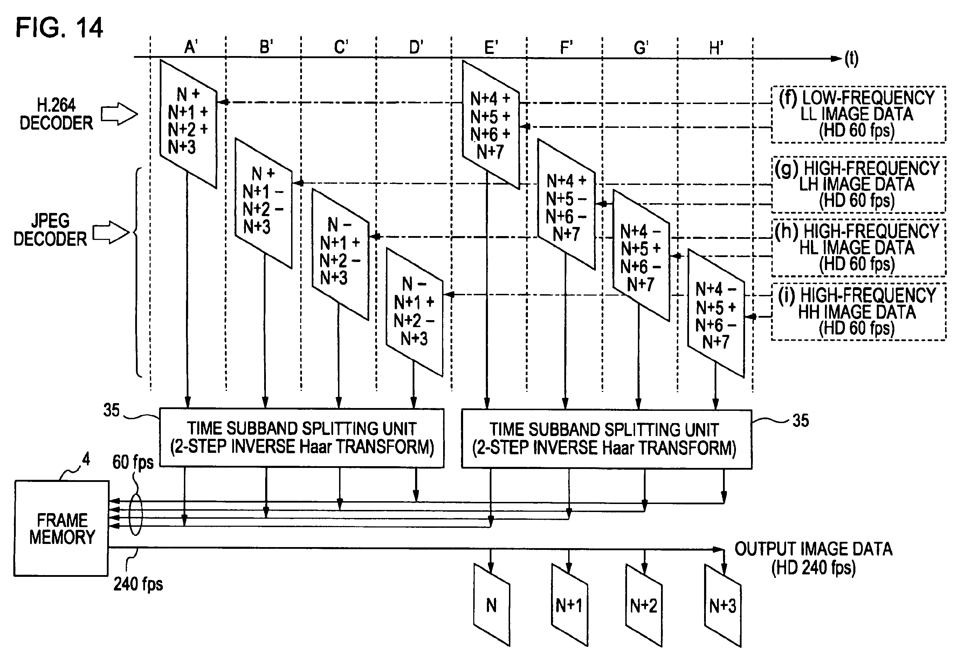

The camera signal processors A56, B57, and C58, and D59, and the time subband splitting unit 35 have been described as components for performing camera signal processing, such as white-balance correction, gain correction, demosaic processing, matrix processing, and gamma correction, on the low-frequency signal 91 and the high-frequency signals 92 to 94, respectively. The signal processing form is not limited to this example, and various forms are possible. The details of processing in the time subband splitting unit 35 will be described later with reference to Figs. 13 and 14.

The lower frequency image data, which is output from the camera signal processor A56, is input to the first codec unit 63 and is also is input to the finder output unit 9. The higher frequency image data, which is output from the camera signal processor B57, is input to the second codec unit 64. Hereinafter, in a similar manner, the higher frequency image data, which is output from the camera signal processor C58, is input to the third codec unit 65, and the higher frequency image data, which is output from the camera signal processor D59, is input to the fourth codec unit 66.

The finder output unit 9 converts the lower frequency image data, which is supplied from the camera signal processor A56, into a signal to be displayed on a viewfinder (not shown), and outputs it. The resolution and the frame rate of the image to be displayed on the viewfinder may differ from the input image data when they are compared. In such a case, the finder output unit 9 performs a resolution conversion process and a frame rate conversion process. When a frame rate conversion process is to be performed, a frame memory (not shown) is used. It may be necessary that an image to be displayed on the view-finder be a luminance image. In such a case, the finder output unit 9 converts the input image into a luminance image, and outputs it.

The first codec unit 63 compresses the lower frequency image data, which is supplied from the camera signal processor A56, by using the first image codec, and outputs lower frequency stream data 95. The first codec unit 63 is formed of, for example, an inter-frame codec of an H.264 codec method. As described above, the lower frequency image data corresponds to image-captured data at a frame rate (60 frames per second in the present embodiment) that is 1/4 the image-capturing frame rate.

By assuming the lower frequency image data to be moving image data at normal 60 frames per second, the first codec unit 63 compresses the image data in accordance with a standard specification, such as the H.264 High Profile specification. However, the first codec is not limited to an H.264 codec. Any method may be used as long as it can compress ordinary moving image data. For example, an inter-frame codec of, for example, MPEG-2, an intra-frame codec of, for example, Motion-JPEG, or a codec that performs processing in accordance with an MPEG4 format or an AVCHD format may be used. Furthermore, the stream data 95 output by the first codec unit 63 may not be in compliance with a standard specification.

The second codec unit 64 compresses higher frequency image data corresponding to the high-frequency signal 92 (high-frequency signal $O_{LH}$) supplied from the camera signal processor B57 and outputs higher frequency stream data 96.

The second codec unit 64 is formed of, for example, an intra-frame codec of a JPEG codec method.. As described above, the higher frequency image data is such that the difference among four adjacent frames is determined and is moving image data such that an effective pixel value exists in only the area of the moving subject. That is, the higher frequency image data is such that there is no information (becomes a fixed value) in a portion where there is no time-related change, and also in a portion where there is motion, an area having a small luminance difference has a small amount of information. Usually, such an image signal is easy to compress. Even if an inter-frame codec having a high compression efficiency, though the processing is complex and it has a high cost, is not used, even an intra-frame codec, such as a low-cost JPEG codec, allows compression to a sufficiently small amount of information. Therefore, the second codec unit 64 compresses the higher frequency image data for each frame by using a JPEG codec.

The third codec unit 65 compresses the higher frequency image data, which corresponds to the high-frequency signal 93 (the high-frequency signal $O_{HL}$) supplied from the camera signal processor C58, and outputs higher frequency stream data 97.

The third codec unit 65 is configured by codec configuration similar to the second codec unit 64, for example, an intra-frame codec of a JPEG codec method.

The fourth codec unit 66 compresses the higher frequency image data corresponding to the high-frequency signal 93 (the high-frequency signal $O_{HH}$) supplied from the camera signal processor D59, and outputs higher frequency stream data 98.

Also, the fourth codec unit 66 is configured by codec configuration similar to the second codec unit 64, for example, an intra-frame codec of a JPEG codec method.

As described above, the first codec unit 63 is set as compression processing means having a compression efficiency higher than that of the second codec unit 64 to the fourth codec unit 66. The second codec unit 64 to the fourth codec unit 66 can be configured to have a compression efficiency lower than that of the first codec unit 63 and have a small circuit scale.

Many recent image-capturing apparatuses have a function of capturing still images, and most of them include a JPEG codec for still images as a component. Therefore, in a case where the second codec unit 64 to the fourth codec unit 66 for compressing higher frequency image data are to be configured by JPEG codecs, it is possible to use JPEG codecs for still images. In this case, there is a merit that an additional cost for performing compression of a high-frame-rate image is not necessary. However, the second codec unit 64 to the fourth codec unit 66 are not limited to JPEG codecs. Any method for compressing ordinary image data may be used. For example, an intra-frame codec of JPEG 2000 or the like, or an inter-frame codec of MPEG-2 or the like may be used.

The second codec unit 64 to the fourth codec unit 66 for performing a compression process on each of the plurality of higher frequency subband splitting signals may be configured by encoding processing means having an identical form. In addition, the codec units 64 to 66 may be configured by encoding processing means for performing different encoding processes.

The compressed stream data 95 and the stream data 96 to 98, which are output from the first codec unit 63 and the second codec unit 64 to the fourth codec unit 66, respectively, are input to the stream controller 71.

The stream controller 71 combines the stream data 95 obtained by compressing the lower frequency image data, which is input from the first codec unit 63, and the stream data 96 to 98 obtained by compressing the higher frequency image data, which is input from the second codec unit 64 to the fourth codec unit 66, and outputs the resulting data to the recorder 81. As described above, the lower frequency stream data 95, which is supplied from the first codec unit 63, is data obtained by compressing a moving image at 60 frames per seconds by using an H.264 codec and is a stream in compliance with a standard specification.

On the other hand, the higher frequency stream data 96 to 98, which are supplied from the second codec unit 64 to the fourth codec unit 66, is data obtained by compressing a difference image at 60 frames per second by using a JPEG codec, the stream data 96 to 98 differing from a standard video stream. The stream controller 71 packetizes the stream data 96 to 98 supplied from the second codec unit 64 to the fourth codec unit 66, and superposes the stream data as user data on a stream in compliance with a standard specification, which is supplied from the first codec unit 63.

That is, the stream controller 71 superposes the data as user data obtained by packetizing the compressed higher frequency data, which is supplied from the second codec unit 64 to the fourth codec unit 66, on a stream in compliance with a standard specification, which is supplied from the first codec unit 63. For decoding, packets that are set as user data will be separated, and processing will be performed. This processing will be described later.

The combined stream data output from the stream controller 71 is input to the recorder 81.

The recorder 81 records the stream data in compliance with a standard specification, which is supplied from the stream controller 71, on a recording medium, such as a magnetic tape, a magneto-optical disc, a hard disk, or a semiconductor memory.

As a result of the above-described operations, it becomes possible to compress an image signal captured at a frame rate (240 frames per second in the present embodiment) that is four times the normal rate at a speed that keeps up with the processing speed at the normal frame rate (60 frames per second in the present embodiment) by applying a first codec having a superior compression efficiency and second to fourth codecs that can be implemented at a low cost. Thus, an image-capturing apparatus that implements image capturing, processing, and recording at a high frame rate while minimizing a cost increase is provided.

In the present embodiment, an image-capturing apparatus that implements image capturing, processing, and recording at a frame rate (240 frames per second) that is four times the normal rate has been described. This processing is not limited to a two or four times frame rate. It is possible to extend the embodiment to an image-capturing apparatus that implements image capturing, processing, and recording at a frame rate that is N times (N is a power of 2) (N times 60 frames per second), which can be implemented by hierarchical time subband splitting.

Next, operations during reproduction will be described with reference to the drawings.

In order to reproduce a recorded moving image, the image-capturing apparatus 400 reads, in accordance with the operation of a user, stream data recorded in the recorder 81 in the manner described above. The stream data read from the recorder 81 is input to the stream controller 71.

The stream controller 71 receives the stream data supplied from the recorder 81, and separates it into lower frequency stream data compressed by the first codec unit 63 and higher frequency stream data compressed by the second codec units 64 to 66. As described above, the stream data recorded in the recorder 81 is stream data in compliance with a standard specification in the compression method by the first codec unit 63. The stream data compressed by the second codec units 64 to 66 has been packetized and superposed as user data.

The stream controller 71 extracts, from the stream data received from the recorder 81, data obtained by packetizing the stream data compressed by the second codec unit 64 to the fourth codec unit 66, which has been superposed as user data, separates the data into stream data 95 compressed by the first codec unit 63 and stream data 96 to 98 compressed by the second codec unit 64 to the fourth codec unit 66, and outputs them to the first codec unit 63 and the second codec unit 64 to the fourth codec unit 66, respectively.

The first codec unit 63 receives the stream data 95 supplied from the stream controller 71, and performs decoding, that is, a decompression process. As described above, the first codec unit 63 is formed of, for example, an inter-frame codec of an H.264 codec method. Furthermore, the stream data 95 is a stream compressed in compliance with a standard specification, such as the H.264 High Profile specification, in the first codec unit 63. The first codec unit 63 decompresses and converts the stream data 95 into lower frequency moving image data at 60 frames per second. As described above, since the lower frequency moving image data corresponds to the image-captured data at 60 frames per second, the moving image data output from the first codec unit 63 is a moving image at normal 60 frames per second.

The second codec unit 64 receives the stream data 96 supplied from the stream controller 71 and performs a decompression process. As described above, the second codec unit 64 is formed of, for example, an intra-frame codec of a JPEG codec method. The second codec unit 64 decompresses the stream data 96 so as to be converted into higher frequency moving image data at 60 frames per second. As described above, since the higher frequency moving image data is such that the difference among adjacent four frames of image-captured data is determined, the moving image data output from the second codec unit 64 is time-difference moving image at 60 frames per second.

The third codec unit 65 receives the stream data 97 supplied from the stream controller 71 and performs a decompression process. As described above, the third codec unit 65 is a processor identical to the second codec unit 64, and the moving image data output from the third codec unit 65 is a time-difference moving image at 60 frames per second.

The fourth codec unit 66 receives the stream data 98 supplied from the stream controller 71 and performs a decompression process. As described above, the fourth codec unit 66 is a processor identical to the second codec unit 64, and the moving image data output from the fourth codec unit 66 is a time-difference moving image at 60 frames per second.

The second codec unit 64 to the fourth codec unit 66 for performing a decompression process on each of the higher frequency stream data 96 to 98 supplied from the stream controller 71 may be configured by decoding processing means having the same form. In addition, they may be configured by decoding means that performs different decoding processes.

All the moving image data output from the first codec unit 63 and the moving image data output from the second codec unit 64 to the fourth codec unit 66 are input to the time subband splitting unit 35. In this case, the time subband splitting unit functions as the time subband combining unit 35. That is, by receiving the decoding results of the first codec unit 63 and the second codec unit 64 to the fourth codec unit 66 and by performing a subband combining process in the time direction, a combined image signal whose frame rate is higher than the frame rate of the image signal output by each codec is generated.

More specifically, the time subband splitting unit (time subband combining unit) 35 performs an inverse transform (inverse wavelet transform in the time direction) in accordance with Expressions 4 described above on lower frequency moving image data and higher frequency moving image data, which are supplied from the first codec unit 63 and the second codec unit 64 to the fourth codec unit 66, thereby generating an image of four consecutive frames at 240 frames per second. The time subband splitting unit 35 temporarily stores the four consecutive frame images in the frame memory 4 and also alternately reads past consecutive four-frame images at a four-times frame rate (240 frames per second). By performing such processing, it is possible to restore moving image data at 240 frames per second.

Moving image data generated by the time subband splitting unit (time subband combining unit) 35 is a combined image signal at a frame rate determined on the basis of the total number of the image signal of the low frequency components generated by the first codec unit 63 and the image signals of high frequency components generated by the second codec unit 64 to the fourth codec unit 66.

Furthermore, when the operation of the user and the information obtained from a connected image display device demand that a moving image at 60 frames per second be output, the time subband splitting unit 35 outputs the lower frequency moving image data, which is supplied from the first codec unit 63, as it is. As described above, since the moving image data output from the first codec unit 63 is a moving image generated by adding four adjacent frame images at 240 frames per second, it corresponds with a moving image captured at 60 frames per second. When such an operation is to be performed, it is possible for the controller (not shown) to control the second codec unit 64 to the fourth codec unit 66 so as not to be operated, and operations with low power consumption is possible.

Furthermore, when the operation of the user and the information obtained from a connected image display device demands that a moving image at 120 frames per second be output, the time subband splitting unit 35 converts the data in accordance with Expressions 5 shown below on the basis of the lower frequency moving image data, which is supplied from the first codec unit 63 and the higher frequency moving image data, which is supplied from the second codec unit 64, thereby generating a moving image at 120 frames per second.

$$R'(x, y, 4t) = O'_{LL}(x, y, 4t) + O'_{LH}(x, y, 4t) - \frac{Range}{2}$$

$$R'(x, y, 4t+2) = O'_{LL}(x, y, 4t) - O'_{LH}(x, y, 4t) + \frac{Range}{2}$$

$$\text{(Expressions 5)}$$

The moving image converted as described above is a moving image obtained by adding two adjacent frame images at 240 frames per second, and corresponds with a moving image captured at 120 frames per second. In a case where such an operation is to be performed, it is possible for the controller (not shown) to control the third codec unit 65 and the fourth codec unit 66 so as not to be operated, and operations with low power consumption is possible.

The moving image data output from the time subband splitting unit 35 is input to the video output unit 10.

The video output unit 10 outputs the moving image data supplied from the time subband splitting unit 35 as video data at 240 frames per second. The video data to be output herein may be one in compliance with a digital video signal format, such as an HDMI (High-Definition Multimedia Interface) specification or a DVI (Digital Visual Interface) specification, or may be one in compliance with an analog component signal format using a D terminal. The video output unit 10 performs a signal conversion process in accordance with the format of an output video signal.

As a result of the above-described operations, it is possible to reproduce data in which an image signal captured at a frame rate (240 frames per second in the present embodiment) four times the normal rate is recorded and possible to decompress the data by using a first codec having a superior compression efficiency and the second to fourth codecs that can be realized at a low cost. Thus, an image-capturing apparatus that implements reproduction output of a high-frame-rate video while minimizing a cost increase is provided.

Furthermore, as described above, in a case where it is demanded that a moving image at 60 frames per second be output in accordance with information obtained from a connected image display device, the construction may be formed in such a way that lower frequency moving image data, which is supplied from the first codec unit 63, is directly output. In this case, during reproduction, it is possible to stop the processing of the second to fourth codecs, and reduction of power consumption and video image output at a normal video frame rate can be realized.

Furthermore, as described above, in a case where it is demanded that a moving image at 120 frames per second be output in accordance with information obtained from a connected image display device, the construction may be formed in such a way that a moving image created from lower frequency moving image data, which is supplied from the first codec unit 63, and higher frequency moving image data, which is supplied from the second codec unit 64 are output. In this case, during reproduction, it is possible to stop processing of the third codec unit 65 and the fourth codec unit 66, and reduction of power consumption and video image output at a normal video frame rate can be realized.

In the present embodiment as described above, the image-capturing apparatus that implements video reproduction at a frame rate (240 frames per second) four times the normal rate has been described. This processing is not limited to a two or four times frame rate, and it is possible to extend the embodiment to an image-capturing apparatus that implements video output at a frame rate that is N times (N is a power of 2) (N times 60 frames per second), which can be realized by hierarchical time subband splitting. At this time, it is possible to implement video reproduction at a frame rate any M times (M is a power of 2, which is smaller than or equal to N) (M times 60 frames per second). In the case of reproduction at an M-times frame rate, it is possible to realize reduction of power consumption by stopping the processing of some of the codec units.

Exemplary operations of the time subband splitting process and the codec process in the time subband splitting unit 35 in the present image-capturing apparatus will be described with reference to Figs. 13 to 15.

First, operations during image capturing will be described with reference to Fig. 13.

Fig. 13 shows a time subband splitting process in the time subband splitting unit 35 during image capturing, that is, a process for consecutive frames in the time direction.

(a) Image-capturing element output data is an output of the image-capturing element 25 shown in Fig. 11. For this data, frame images (N to N+7 in the figure) of an HD resolution is output at a speed at 240 frames per second. Here, N is an arbitrary integer.

(b) LOW-FREQUENCY LL image data is lower frequency image data (60 frames per second in the present embodiment), which is generated by a time subband process in the time subband splitting unit 35 shown in Fig. 11 and output as a processed signal in the camera signal processor A56 and the first codec unit 63,

(c) High-frequency LH image data is higher frequency image data (60 frames per second in the present embodiment), which is generated by a time subband process in the time subband splitting unit 35 shown in Fig. 11 and output as a processed signal in the camera signal processor B57 and the second codec unit 64.

(d) High-frequency HL image data is higher frequency image data (60 frames per second in the present embodiment), which is generated by a time subband process in the time subband splitting unit 35 shown in Fig. 11 and output as a processed signal in the camera signal processor C58 and the third codec unit 65.

(e) High-frequency HH image data is higher frequency image data (60 frames per second in the present embodiment), which is generated by a time subband process in the time subband splitting unit 35 shown in Fig. 11 and output as a processed signal in the camera signal processor D59 and the fourth codec unit 66.

The frame image output from the image-capturing element 25 is temporarily stored in the frame memory 4 in the time subband splitting unit 35. At this time, the speed of the storage into the frame memory 4 is 240 frames per second. The time subband splitting unit 35 stores the frame image in the frame memory 4 and also reads an image of past consecutive four frames that have already been stored at the same time. At this time, the reading speed of the consecutive four-frame images from the frame memory 4 is 60 frames per second.

A description will be given below of specific operation examples of a process for generating (b) low-frequency LL image data, (c) high-frequency LH image data, (d) high-frequency HL image data, and (e) high-frequency HH image data in the time subband splitting unit 35 involving control of the frame memory 4. When image capturing starts, during a period A shown in Fig. 13, the time subband splitting unit 35 receives a frame image N input from the image-capturing element 25 and stores it in the frame memory 4. Next, in a period B, the time subband splitting unit 35 receives a frame image N+1 from the image-capturing element 25 and stores it in the frame memory 4. In a similar manner, in a period C, the time subband splitting unit 35 receives a frame image N+2 from the image-capturing element 25, and receives a frame image N+3 in a period D, and stores it in the frame memory 4.

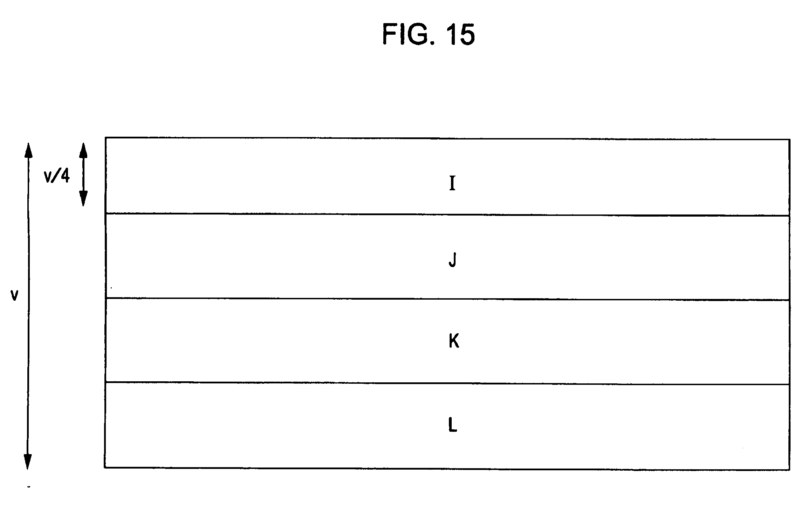

In a period E, the time subband splitting unit 35 stores a frame image N+4 in the frame memory 4 and also reads the frame image N, the frame image N+1, the frame image N+2, and the frame image N+3 from the memory 4 at the same time. At this time, since the reading speed is 1/4 (240 frames per second/4 = 60 frames/second in the present embodiment) the storage speed, regarding the frame images N to N+3, only the upper 1/4 portion of the screen is read. Fig. 15 shows one frame image data stored in the frame memory 4. In the period E, the time subband splitting unit 35 reads only the upper 1/4 portion (I portion shown in Fig. 15) of the screen of the frame images N to N+3.

In a next period F, the time subband splitting unit 35 stores a frame image N+5 in the frame memory 4 and also reads the frame image N, the frame image N+1, the frame image N+2, and the frame image N+3 from the memory 4 at the same time. In the period F, the next 1/4 data of the frame images N to N+3, that is, only the J area shown in Fig. 15, is read.

In a period G, the time subband splitting unit 35 stores a frame image N+6 in the frame memory 4 and also reads the frame image N, the frame image N+1, the frame image N+2, and the frame image N+3 from the memory 4 at the same time. In the period G, the next 1/4 data of the frame images N to N+3, that is, only the K area shown in Fig. 15, is read.

In a period H, the time subband splitting unit 35 stores the frame image N+5 in the frame memory 4 and also reads the frame image N, the frame image N+1, the frame image N+2, and the frame image N+3 from the memory 4 at the same time. In the period H, the remaining 1/4 data of the frame images N to N+3, that is, only the L area shown in Fig. 15, is read.

As described above, in the time subband splitting unit 35, a delay for four frames occur.

The consecutive four-frame images (for example, N, N+1, N+2, and N+3 in the figure) read from the frame memory 4 are subjected to a transform shown in Expressions 3 described earlier in the time subband splitting unit 35 and is divided into lower frequency image data (LL image data) and three items of higher frequency image data (LH image data, HL image data, and HH image data). Here, each of the lower frequency image data and the higher frequency image data is moving image data at 60 frames per second.

The lower frequency image data output from the time subband splitting unit 35 is processed by the camera signal processor A56 as described above, and thereafter is subjected to a compression process in the first codec unit 63 (H.264 encoder in the figure). On the other hand, the higher frequency image data output from the time subband splitting unit 35 is processed in the camera signal processor B57 to the camera signal processor D59 as described above, and thereafter is subjected to a compression process in the second codec unit 64 to the fourth codec unit 66 (JPEG encoder in the figure).

Next, operations during reproduction will be described with reference to Fig. 14.

Fig. 14 shows operations for consecutive frames in the time direction during reproduction.

The stream data read from the recorder 81 is separated to lower frequency stream data and three higher frequency stream data in the stream controller 71. These stream data are subjected to a decompression process by the first codec unit 63 (H.264 decoder in the figure) and the second codec unit 64 to the fourth codec unit 66 (JPEG decoder in the figure), respectively. As a result of being subjected to a decompression process, lower frequency image data is output from the first codec unit 63, and three higher frequency image data is output from the second codec unit 64 to the fourth codec unit 66. These image data are each moving image data at 60 frames per second. They are (f) low-frequency LL image data, (g) high-frequency LH image data, (h) high-frequency HL image data, and (i) high-frequency HH image data shown in Fig. 14.

The image data output from the first codec unit 63 and the second codec unit 64 to the fourth codec unit 66 are each input to the time subband splitting unit 35. The time subband splitting unit 35 performs a transform (an inverse wavelet transform in which a Haar function is used a base) shown in Expressions 4 above on the image data, so that the image data is converted into consecutive four-frame images (for example, N, N+1, N+2, and N+3 in the figure) in a moving image at 240 frames per second. The converted consecutive four-frame images are stored temporarily in the frame memory 4 by the time subband splitting unit 35.

At this time, the speed of the storage into the frame memory 4 is 60 frames per second. The time subband splitting unit (time subband combining unit) 35 stores the image of consecutive four frames in the frame memory 4 and also reads a past frame image that has already been stored. At this time, the speed of reading of a frame image from the frame memory 4 is 240 frames per second.

Operations regarding control of a frame memory will be described below more specifically.

When reproduction starts, in a period A', the time subband splitting unit (time subband combining unit) 35 performs an inverse transform on only the 1/4 data portion within the first frame images (for example, N + (N+1) + (N+2) + (N+3)) of a low-frequency LL image, a high-frequency LH image, a high-frequency HL image, and a high-frequency HH image.

A description will be given with reference to Fig. 15. The time subband splitting unit (time subband combining unit) 35 performs an inverse transform on only the I area within the frame data shown in Fig. 15, thereby generating image data (the I area in Fig. 15) of 1/4 of the frame images N to N+3. The time subband splitting unit (time subband combining unit) 35 stores image data (the I area in Fig. 15) of 1/4 of the frame image N to N+3 in the frame memory 4 at the same time.

Next, in a period B', the time subband splitting unit (time subband combining unit) 35 performs an inverse transform on the next 1/4 data (a J area shown in Fig. 15) with regard to each of the first frame images (for example, N + (N+1) + (N+2) + (N+3)) of the low-frequency LL image, the high-frequency LH image, the high-frequency HL image, and the high-frequency HH image. The J area in Fig. 15 of the frame images N to N+3 is generated. The time subband splitting unit 35 stores the J area in Fig. 15 of the screen of the frame images N to N+3 in the frame memory 4 at the same time.

In a similar manner, in a period C', the time subband splitting unit (time subband combining unit) 35 performs an inverse transform on the next 1/4 data (a K area shown in Fig. 15) with regard to each of the first frame images (for example, N + (N+1) + (N+2) + (N+3)) of the low-frequency LL image, the high-frequency LH image, the high-frequency HL image, and the high-frequency HH image. The K area in Fig. 15 of the screen of the frame images N to N+3 is generated. The time subband splitting unit 35 stores the K area in Fig. 15 on the screen of the frame images N to N+3 in the frame memory 4 at the same time.

In a similar manner, in a period D', the time subband splitting unit (time subband combining unit) 35 performs an inverse transform on the next 1/4 data (an L area shown in Fig. 15) with regard to each of the first frame images (for example, N + (N+1) + (N+2) + (N+3)) of the low-frequency LL image, the high-frequency LH image, the high-frequency HL image, and the high-frequency HH image. The L area shown in Fig. 15 on the screen of the frame image N to N+3 is generated. The time subband splitting unit 35 stores the L area in Fig. 15 on the screen of the frame image N to N+3 in the frame memory 4 at the same time.

Next, in a period E', the time subband splitting unit (time subband combining unit) 35 performs an inverse transform on the next 1/4 data (an I area shown in Fig. 15) with regard to each of the next frame images (for example, (N+4) + (N+5) + (N+6) + (N+7)) of the low-frequency LL image, the high-frequency LH image, the high-frequency HL image, and the high-frequency HH image. The I area in Fig. 15 on the screen of the frame images N+4 to N+7 is generated. The time subband splitting unit 35 stores the I area in Fig. 15 on the screen of the frame images N+4 to N+7 in the frame memory 4 and also reads the frame image N at the same time.

In a period F', the time subband splitting unit (time subband combining unit) 35 performs an inverse transform on the next 1/4 data (a J area shown in Fig. 15) with regard to each of the frame images (for example, (N+4) + (N+5) + (N+6) + (N+7)) of the low-frequency LL image, the high-frequency LH image, the high-frequency HL image, and the high-frequency HH image. The J area in Fig. 15 on the screen of the frame images N+4 to N+7 is generated. The time subband splitting unit 35 stores the J area in Fig. 15 on the screen of the frame images N+4 to N+7 in the frame memory 4 and also reads the frame image N+1 at the same time.

In a similar manner, in a period G', the time subband splitting unit (time subband combining unit) 35 performs an inverse transform on the next 1/4 data (a K area shown in Fig. 15) with regard to each of the frame images (for example, (N+4) + (N+5) + (N+6) + (N+7)) of the low-frequency LL image, the high-frequency LH image, the high-frequency HL image, and the high-frequency HH image. The K area in Fig. 15 on the screen of the frame images N+4 to N+7 is generated. The time subband splitting unit 35 stores the K area in Fig. 15 on the screen of the frame images N+4 to N+7 in the frame memory 4 and also reads the frame image N+2 at the same time.

In a similar manner, in a period H', the time subband splitting unit (time subband combining unit) 35 performs an inverse transform on the next 1/4 data (a L area shown in Fig. 15) with regard to each of the frame images (for example, (N+4) + (N+5) + (N+6) + (N+7)) of the low-frequency LL image, the high-frequency LH image, the high-frequency HL image, and the high-frequency HH image. The L area in Fig. 15 on the screen of the frame images N+4 to N+7 is generated. The time subband splitting unit 35 stores the L area in Fig. 15 on the screen of the frame images N+4 to N+7 in the frame memory 4 and also reads the frame image N+3 at the same time.

As described above, regarding the image data output from the time subband splitting unit 35, a delay for four frames occurs. Furthermore, as a result of performing the operations shown in Fig. 14, the image-capturing apparatus 400 realizes moving image output at 240 frames per second.

With regard to examples of the configuration for performing processing on image-captured data at a high-speed (N times) frame rate, which has been described with reference to Figs. 11 to 15, a modification identical to those described earlier with reference to Figs. 6 to 10 is possible.

That is, the following configurations are possible:

a configuration in which some of the camera signal processors described with reference to Fig. 6 is omitted,
a configuration in which the camera signal processor described with reference to Fig. 7 is set between the image-capturing element and the time subband splitting unit,
a configuration in which the stream controller and the storage unit described with reference to Fig. 8 are set on a signal-by-signal base,
a configuration in which a video signal is input and processing is performed, which is described with reference to Fig. 9,
the configuration of the image processing apparatus for performing only a reproduction process, which is described with reference to Fig. 10, and
the configuration shown in Fig. 11, in which it is used as a basis and modified to each configuration shown in Figs. 6 to 10, and processing is performed.

The present invention has been described above in detail while referring to specific embodiments. However, it is obvious that modifications and substitutions of the embodiments can be made within the scope of the present invention. That is, the present invention has been disclosed as exemplary embodiments, and should not be construed as being limited.

Note that the series of processes described in the specification can be executed by hardware, software, or a combination of both. In the case where the series of processes is to be performed by software, a program recording the processing sequence may be installed in a memory in a computer embedded in dedicated hardware and executed. Alternatively, the program may be installed on a general-purpose computer capable of performing various processes and executed. For example, the program may be recorded on a recording medium. Note that, besides installing the program from the recording medium to a computer, the program may be installed on a recording medium such as an internal hard disk via a network such as a LAN (Local Area Network) or the Internet.

Note that the various processes described in the specification are not necessarily performed sequentially in the orders described, and may be performed in parallel or individually in accordance with the processing performance or necessity of an apparatus that performs the processes.

In addition, the system in the present specification refers to a logical assembly of a plurality of apparatuses and is not limited to an assembly in which apparatuses having individual structures are contained in a single housing.

It should be understood by those skilled in the art that various modifications, combinations, sub-combinations and alterations may occur depending on design requirements and other factors insofar as they are within the scope of the appended claims or the equivalents thereof.

**Claims**

1. An image processing apparatus (100) comprising:

   time subband splitting means (31) for generating a lower-frequency subband split signal (11) formed of low frequency components at a frame rate lower than a frame rate of an image signal and a higher-frequency subband split signal (12) formed of high frequency components by performing a subband splitting process in a time direction on the image signal;
   first encoding means (61) for compressing the lower-frequency subband split signal (11) to produce lower-frequency stream data (13) in conformity with a standard specification such as H.264 or the like;
   second encoding means (62) for compressing the higher-frequency subband split signal (12) to produce higher-frequency stream data (14);
   wherein the first encoding means (61) and the second encoding means (62) perform different encoding processes;

   **characterized by**:

   a stream controller (7) adapted to packetize the higher-frequency stream data (14) and superpose it as user data in the lower-frequency stream data (13) in conformity with the standard specification.

2. The image processing apparatus (100) according to Claim 1, wherein at least one of the following conditions is satisfied:

   (a) the first encoding means (61) includes encoding processing means having a compression efficiency higher than the second encoding means (62); and/or

(b) the second encoding means (62) includes encoding processing means having a circuit scale smaller than the first encoding means (61).

3. The image processing apparatus (100) according to Claim 1, wherein the time subband splitting means (31) is a wavelet converter in the time direction, and performs a process for dividing a frame signal into low-frequency components (11) and high-frequency components (12) by performing a Haar transform among a plurality of frames adjacent in the time direction.

4. The image processing apparatus (100) according to Claim 1, wherein the time subband splitting means (31) receives an image signal at P frames per second, where P is an integer, as the image signal and generates a lower-frequency subband split signal (11) and a higher-frequency subband split signal (12), both at (P/Q) frames/second, where Q is equal to a power of 2, by performing a subband splitting process in the time direction; optionally wherein the first encoding means (61) and the second encoding means (62) perform an encoding process at (P/Q) frames per second.

5. The image processing apparatus (100) according to Claim 1, further comprising:

recording means (8) for recording lower frequency stream data (11) output from the first encoding means (61) and higher frequency stream data (12) output from the second encoding means (62);
first decoding means (61) for receiving lower-frequency stream data recorded in the recording means (8) and performing a process for decompressing low-frequency components;
second decoding means (62) for receiving higher-frequency stream data recorded in the recording means (8) and performing a process for decompressing high-frequency components; and
time subband combining means (31), optionally an inverse wavelet converter in the time direction, for generating a combined image signal at a frame rate higher than a frame rate of the image signals which are the decoding results of the first decoding means (61) and the second decoding means (62), by performing a subband combining process in the time direction on the image signals which are the decoding results of the first decoding means (61) and the second decoding means (62).

6. The image processing apparatus (400) according to Claim 1,
wherein the time subband splitting means (35) generates a plurality of higher frequency subband splitting signals (92, 93, 94), and
wherein the frame rates of the lower frequency subband splitting signal (91) and the plurality of higher frequency subband splitting signals (92, 93, 94) are frame rates that are determined in accordance with the total number of the lower frequency subband splitting signal (91) and the plurality of higher frequency subband splitting signals (92, 93, 94); optionally wherein the second encoding means (64-66) includes a plurality of different encoding means (64-66) for performing a compression process on each of the plurality of higher frequency subband splitting signals (92-94).

7. The image processing apparatus (400) according to Claim 1,
wherein the time subband splitting means (35) generates one lower frequency subband splitting signal (91) by performing a process for adding signal values of corresponding pixels of N, with N ≥ 2, image frames continuous with respect to time, which are contained in the image signal, and generates N-1 higher frequency subband splitting signals (92-94) by performing processes for adding and subtracting signal values of corresponding pixels of N, with N ≥ 2, image frames continuous with respect to time, which are contained in the image signal, and
wherein each of the N-1 higher frequency subband splitting signals (92-94) is a signal that is calculated by differently setting a combination of image frames for which an addition process and a subtraction process are performed.

8. The image processing apparatus (100) according to Claim 1, further comprising:

an image-capturing element (25) configured to obtain an image signal by photoelectric conversion,

wherein the time subband splitting means (31) generates a lower-frequency subband split signal (11) at a frame rate lower than a frame rate of a signal from the image-capturing element (25) and a higher-frequency subband split signal (12) by performing a process on the image signal from the image-capturing element (25).

9. An image processing apparatus (100) comprising:

first decoding means (61) for receiving lower-frequency stream data (13) recorded in recording means (8) in conformity with a standard specification such as H.264 or the like and performing a process for decompressing low-frequency components;

second decoding means (62) for receiving higher-frequency stream data (14) recorded in the recording means (8) and performing a process for decompressing high-frequency components; and

time subband combining means (31) for generating a combined image signal at a frame rate higher than a frame rate of the image signals which are the decoding results of the first decoding means (61) and the second decoding means (62), by performing a subband combining process in the time direction on the image signals which are decoding results of the first decoding means (61) and the second decoding means (62);

**characterized by**:

a stream controller (7) adapted to separate packetized user data from the lower-frequency stream data recorded in conformity with the standard specification and to supply it as said higher-frequency stream data (14) to said second decoding means (62).

10. The image processing apparatus (100; 400) according to Claim 9, wherein at least one of the following is satisfied:

(a) the first decoding means (61) performs decoding of data (13) encoded at a compression efficiency higher than that of the data (14) to be decoded by the second decoding means (62); and/or

(b) wherein the second decoding means (64-66) includes a plurality of different decoding means (64-66) for performing a decompression process on each of a plurality of items of higher frequency stream data (96-98) recorded in the recording means (81).

11. The image processing apparatus (400) according to Claim 9,

wherein the second decoding means (64-66) receives a plurality of different items (96-98) of higher-frequency stream data recorded in the recording means (81) and generates a plurality of different image signals of high frequency components, and

wherein the time subband combining means (35) generates a combined image signal at a high frame rate by performing a subband combining process in the time direction on an image signal that is a decoding result of the first decoding means (63) and a plurality of different image signals that are decoding results of the second decoding means (64-66).

12. The image processing apparatus (400) according to Claim 9,

wherein the time subband combining means (35) generates a combined image signal at a frame rate determined in accordance with the total number of the image signal of low frequency components, which are generated by the first decoding means (63), and the image signals of high frequency components, which are generated by the second decoding means (64-66).

13. An image processing method comprising the steps of:

generating a lower-frequency subband split signal (11) formed of low frequency components at a frame rate lower than a frame rate of an image signal and a higher-frequency subband split signal (12) formed of high frequency components by performing a subband splitting process in a time direction on the image signal;

compressing the lower-frequency subband split signal to produce lower-frequency stream data (13) in conformity with a standard specification such as H.264 or the like; and

compressing the higher-frequency subband split signal to produce higher-frequency stream data;

wherein the step of compressing the lower-frequency subband split signal and the step of compressing the higher-frequency subband split signal are performed according to different encoding processes;

**characterized by**:

packetizing the higher frequency stream data (14) and superposing it as user data in the lower-frequency stream data (13) in conformity with the standard specification.

14. An image processing method comprising the steps of:

receiving lower-frequency stream data (13) conforming to a standard specification such as H.264 or the like and performing a process for decompressing low-frequency components;
receiving higher-frequency stream data (14) and performing a process for decompressing high-frequency components; and
generating a combined image signal at a frame rate higher than the frame rate of a first image signal by performing a subband combining process in the time direction on the basis of the first image signal obtained by a process for decompressing the lower-frequency stream data (13) and a second image signal obtained by a process for decompressing the higher-frequency stream data (14);

**characterized by**:

separating packetized user data from the lower-frequency stream data and supplying it as said higher-frequency stream data (14) to said process for decompressing high-frequency components.

15. A program for causing a computer to perform an information processing method according to claim 13 or 14.

**Patentansprüche**

1. Bildverarbeitungsvorrichtung (100), aufweisend:

eine Zeitsubbandteilungseinrichtung (31) zur Erzeugung eines aus Niedrigfrequenzkomponenten mit einer Rahmenrate niedriger als eine Rahmenrate eines Bildsignals gebildeten Niedrigerfrequenzsubbandgeteiltsignals (11) und eines aus Hochfrequenzkomponenten gebildeten Höherfrequenzsubbandgeteiltsignals (12) durch Ausführen eines Subbandteilungsprozesses in einer Zeitrichtung am Bildsignal,
eine erste Codierungseinrichtung (61) zum Komprimieren des Niedrigerfrequenzsubbandgeteiltsignals (11) zum Erzeugen von Niedrigerfrequenzstromdaten (13) in Übereinstimmung mit einer Standardspezifikation wie beispielsweise H.264 oder dgl.,
eine zweite Codierungseinrichtung (62) zum Komprimieren des Höherfrequenzsubbandgeteiltsignals (12) zum Erzeugen von Höherfrequenzstromdaten (14),
wobei die erste Codierungseinrichtung (61) und die zweite Codienngseinrichtung (62) unterschiedliche Codierungsprozesse ausführen,
**gekennzeichnet durch**
einen Datenstromkontroller (7), ausgebildet zum Paketbilden der Höherfrequenzstromdaten (14) und Überlagern der Höhenfrequenzstromdaten als Benutzerdaten in den Niedrigerfrequenzstromdaten (13) in Übereinstimmung mit der Standardspezifikation.

2. Bildverarbeitungsvorrichtung (100) nach Anspruch 1, wobei wenigstens eine der folgenden Bedingungen erfüllt ist:

(a) die erste Codierungseinrichtung (61) weist eine Codierungsverarbeitungseinrichtung auf, die eine Kompressionseffizienz höher als die zweite Godierungseinrichtung (62) aufweist, und/oder
(b) die zweite Codierungseinrichtung (62) weist eine Codierungsverarbeitungseinrichtung auf, die einen Schaltungsmaßstab kleiner als die erste Codierungseinrichtung (61) aufweist.

3. Bildverarbeitungsvorrichtung (100) nach Anspruch 1, wobei die Zeitsubbandteilungseinrichtung (31) ein Wellenzug (Wavelet)umsetzer in der Zeitrichtung ist und einen Prozess zum Teilen eines Rahmensignals in Niedrigfrequenzkomponenten (11) und Hochfrequenzkomponenten (12) durch Ausführen einer Haar-Transformation zwischen mehreren in der Zeitrichtung benachbarten Rahmen ausführt.

4. Bildverarbeitungsvorrichtung (100) nach Anspruch 1, wobei die Zeitsubbandteilungseinrichtung (31) ein Bildsignal mit P Rahmen pro Sekunde, wobei P eine ganze Zahl ist, als das Bildsignal empfängt und ein Niedrigerfrequenzsubbandgeteiltsignal (11) und ein Höherfrequenzsubbandgeteiltsignal (12), beide mit P/Q Rahmen/Sekunde, wobei Q gleich einer Potenz von 2 ist, erzeugt durch Ausführen eines Subbandteilungsprozesses in der Zeitrichtung, wobei optional die erste Codierungseinrichtung (61) und die zweite Codierungseinrichtung (62) einen Codierungsprozesses mit P/Q Rahmen pro Sekunde ausführen.

5. Bildverarbeitungsvorrichtung (100) nach Anspruch 1, außerdem aufweisend::

eine Aufzeichnungseinrichtung (8) zur Aufzeichnung von aus der ersten Codierungseinrichtung (61) ausgegebenen Niedrigerfrequenzstromdaten (11) und aus der zweiten Codierungseinrichtung (62) ausgegebenen Höherfrequenzstromdaten (12),

eine erste Decodierungseimichtung (61) zum Empfangen von in der Aufzeichnungseinrichtung (8) aufgezeichneten Niedrigerfrequenzstromdaten und Ausführen eines Prozesses zum Dekomprimieren von Niedrigfrequenzkomponenten,

eine zweite Decodierungseinrichtung (62) zum Empfangen von in der Aufzeichnungseinrichtung (8) aufgezeichneten Höherfrequenzstromdaten und Ausführen eines Prozesses zum Dekomprimieren von Hochfrequenzkomponenten, und

eine Zeitsubbandkombinierungseinrichtung (31), optional ein inverser Wellenzug(Wavelet)umsetzer in der Zeitrichtung, zum Erzeugen eines kombinierten Bildsignals mit einer Rahmenrate höher als eine Rahmenrate der Bildsignale, welche die Decodierungsresultate der ersten Decodierungseinrichtung (61) und der zweiten Decodierungsdateneinrichtung (62) sind, durch Ausführen eines Subbandkombinierungsprozesses in der Zeitrichtung an den Bildsignalen, welche die Decodierungsresultate der ersten Decodierungseinrichtung (61) und der zweiten Decodierungseinrichtung (62) sind.

6.  Bildverarbeitungsvorrichtung (400) nach Anspruch 1,
    wobei die Zeitsubbandteilungseinrichtung (35) mehrere Höherfrequenzsubbandteilungssignale (92, 93, 94) erzeugt, und
    wobei die Rahmenraten des Niedrigerfrequenzsubbandteilungssignals (91) und der mehreren Höherfrequenzsubbandteilungssignale (92, 93, 94) Rahmenraten sind, die entsprechend der Gesamtzahl des Niedrigerfrequenzsubbandteilungssignals (91) und des mehreren Höherfrequenzsubbandteilungssignals (92, 93, 94) bestimmt werden, wobei optional die zweite Codierungseinrichtung (64-66) mehrere unterschiedliche Codierungseinrichtungen (64-66) zur Ausführung eines Kompressionsprozesses an jedem der mehreren Höherfrequenzsubbandteilungssignale (92-94) aufweist.

7.  Bildverarbeitungsvorrichtung (400) nach Anspruch 1,
    wobei die Zeitsubbandteilungseinrichtung (35) ein einzelnes Niedrigerfrequenzsubbandteilungssignal (91) durch Ausführen eines Prozesses zum Hinzufügen von Signalwerten korrespondierender Pixel von N Bildrahmen erzeugt, die in dem Bildsignal enthalten sind, wobei N ≥ 2 ist, und die Bildrahmen kontinuierlich in Bezug auf die Zeit sind, und die Zeitsubbandteilungseinrichtung (35) N-1 Höherfrequenzsubbandteilungssignale (92-94) durch Ausführen eines Prozesses zum Hinzufügen und Abziehen von Signalwerten korrespondierender Pixel von N Bildrahmen erzeugt, wobei N ≥ 2 und die Bildrahmen im Bildsignal enthalten und kontinuierlich in Bezug auf die Zeit sind, wobei jedes der N-1 Höherfrequenzsubbandteilungssignale (92-94) ein Signal ist, das durch unterschiedliches Einstellen einer Kombination aus Bildrahmen, für die ein Hinzufügeprozess und ein Abziehprozess ausgeführt wird, erhalten wird.

8.  Bildverarbeitungsvorrichtung (100) nach Anspruch 1, weiter aufweisend:

    ein Bilderfassungselement (25), konfiguriert zum Erhalten eines Bildsignals durch photoelektrische Umsetzung,

    wobei die Zeitsubbandteilungseinrichtung (31) ein Niedrigerfrequenzsubbandgeteiltsignal (11) mit einer Rahmenrate niedriger als eine Rahmenrate eines Signals aus dem Bilderfassungselement (25) und ein Höherfrequenzsubbandgeteiltsignal (12) durch Ausführen eines Prozesses an dem Bildsignal aus dem Bilderfassungselement (25) erzeugt.

9.  Bildverarbeitungsvorrichtung (100), aufweisend:

    eine erste Decodierungseinrichtung (61) zum Empfangen von in einer Aufzeichnungseinrichtung (8) in Übereinstimmung mit einer Standardspezifikation wie beispielsweise H.264 oder dgl. aufgezeichneten Niedrigerfrequenzstromdaten (13) und Ausführen eines Prozesses zum Dekomprimieren von Niedrigfrequenzkomponenten,

    eine zweite Decodierungseinrichtung (62) zum Empfangen von in der Aufzeichnungseinrichtung (8) aufgezeichneten Höherfrequenzstromdaten (14) und Ausführen eines Prozesses zum Dekomprimierten von Hochfrequenzkomponenten, und

    eine Zeitsubbandkombinierungseinrichtung (31) zum Erzeugen eines kombinierten Bildsignals mit einer Rahmenrate höher als eine Rahmenrate der Bildsignale, welche die Decodierungsresultate der ersten Decodierungseinrichtung (61) und der zweiten Decodierungseinrichtung (62) sind, durch Ausführen eines Subbandkombinierungsprozesses in der Zeitrichtung an den Bildsignalen, welche Decodierungsresultate der ersten Decodierungseinrichtung (61) und der zweiten Decodierungseinrichtung (62) sind,

**gekennzeichnet durch**

einen Datenstromkontroller (7), ausgebildet zum Separieren von paketierten Benutzerdaten von den in Übereinstimmung mit der Standardspezifikation aufgezeichneten Niedrigerfrequenzstromdaten und zum Zuführen dieser als die Höherfrequenzstromdaten (14) zur zweiten Decodierungseinrichtung (62).

10. Bildverarbeitungsvorrichtung (100; 400) nach Anspruch 9, wobei wenigstens eines vom Folgenden erfüllt ist:

(a) die erste Decodierungseinrichtung (61) führt eine Decodierung von Daten (13) aus, die mit einer Kompressionseffizienz codiert sind, die höher ist, als die der von der zweiten Decodierungseinrichtung (62) zu decodierenden Daten, und/oder
(b) wobei die zweite Decodierungseinrichtung (64-66) mehrere unterschiedliche Decodierungseinrichtungen (64-66) zum Ausführen eines Dekompressionsprozesses an jeder von mehreren Einzelstücken der in der Aufzeichnungseinrichtung (81) aufgezeichneten Höherfrequenzstromdaten (96-98) aufweist.

11. Bildverarbeitungsvorrichtung (400) nach Anspruch 9,
wobei die zweite Decodierungseinrichtung (64-66) mehrere unterschiedliche Stücke (96-98) von in der Aufzeichnungseinrichtung (91) aufgezeichneten Höherfrequenzstromdaten empfängt und mehrere unterschiedliche Bildsignale aus Hochfrequenzkomponenten erzeugt, und
wobei die Zeitsubbandkombinierungseinrichtung (35) ein kombiniertes Bildsignal mit einer hohen Rahmenrate durch Ausführen eines Subbandkombinierungsprozesses in der Zeitrichtung an einem Bildsignal, das ein Decodierungsresultat der ersten Decodierungseinrichtung (63) ist, erzeugt und mehrere differente Bildsignale, die Decodierungsresultate der zweiten Decodierungseinrichtung (64-66) sind, erzeugt.

12. Bildverarbeitungsvorrichtung (400) nach Anspruch 9,
wobei die Zeitsubbandkombinierungseinrichtung (35) ein kombiniertes Bildsignal mit einer Rahmenrate erzeugt, die entsprechend der Gesamtzahl der Bildsignale von Niedrigfrequenzkomponenten, die von der ersten Decodierungseinrichtung (64-66) erzeugt werden, und der Bildsignale von Hochfrequenzkomponenten, die von der zweiten Decodierungseinrichtung (63) erzeugt werden, bestimmt wird.

13. Bildverarbeitungsverfahren, aufweisend die Schritte:

Erzeugen eines Niedrigerfrequenzsubbandgeteiltsignals (11), gebildet aus Niedrigfrequenzkomponenten mit einer Rahmenrate niedriger als eine Rahmenrate eines Bildsignals, und eines Höherfrequenzsubbandgeteiltsignals (12), gebildet aus Hochfrequenzkomponenten, durch Ausführen eines Subbandteilungsprozesses in einer Zeitrichtung an dem Bildsignal,
Komprimieren des Niedrigerfrequenzsubbandgeteiltsignals zum Erzeugen von Niedrigerfrequenzstromdaten (13) in Übereinstimmung mit einer Standardspezifikation wie beispielsweise H.264 oder dgl. und
Komprimieren des Höherfrequenzsubbandgeteiltsignals zum Erzeugen von Höherfrequenzstromdaten,
wobei der Schritt zum Komprimieren des Niedrigerfrequenzsubbandgeteiltsignals und der Schritt zum Komprimieren des Höherfrequenzsubbandgeteiltsignals entsprechend unterschiedlicher Codierungsprozesse ausgeführt werden,
**gekennzeichnet durch**
Paketbilden der Höherfrequenzstromdaten (14) und Überlagern dieser als Benutzerdaten in den Niedrigerfrequenzstromdaten (13) in Übereinstimmung mit der Standardspezifikation.

14. Bildverarbeitungsverfahren, aufweisend die Schritte:

Empfangen von Niedrigerfrequenzstromdaten (13), entsprechend einer Standardspezifikation wie beispielsweise H.264 oder dgl. und Ausführen eines Prozesses zum Dekomprimieren von Niedrigfrequenzkomponenten,
Empfangen von Höherfrequenzstromdaten (14) und Ausführen eines Prozesses zum Dekomprimieren von Hochfrequenzkomponenten, und
Erzeugen eines kombinierten Bildsignals mit einer Rahmenrate höher als die Rahmenrate des ersten Bildsignals durch Ausführen eines Subbandkombinierungsprozesses in der Zeitrichtung auf der Basis des durch einen Prozess zum Dekomprimieren der Niedrigerfrequenzstromdaten (13) erhaltenen ersten Bildsignals und eines durch einen Prozess zum Dekomprimieren der Höherfrequenzstromdaten (14) erhaltenen zweiten Bildsignals,
**gekennzeichnet durch**
Separieren paketierter Benutzerdaten von den Niedrigerfrequenzstromdaten und Zuführen dieser als die Höherfrequenzstromdaten (14) dem Prozess zum Dekomprimieren von Hochfrequenzkomponenten.

**15.** Programm zum Veranlassen eines Computers, ein Informationsverarbeitungsverfahren nach Anspruch 13 oder 14 auszuführen.

**Revendications**

**1.** Dispositif de traitement d'image (100) comprenant :

un moyen de séparation temporelle en sous-bandes (31) pour générer un signal de séparation en sous-bandes de fréquences inférieures (11) formé de composantes de fréquences basses à une vitesse de trame inférieure à la vitesse de trame d'un signal d'image et un signal de séparation en sous-bandes de fréquences supérieures (12) formé de composantes de fréquences hautes en exécutant un processus de séparation temporelle en sous-bandes sur le signal d'image ;
un premier moyen de codage (61) pour compresser le signal de séparation en sous-bandes de fréquences inférieures (11) pour produire un flux de données de fréquences inférieures (13) en conformité avec une spécification de norme telle que H.264 ou similaire ;
un second moyen de codage (62) pour compresser le signal de séparation en sous-bandes de fréquences supérieures (12) pour produire un flux de données de fréquences supérieures (14) ;
dans lequel le premier moyen de codage (61) et le second moyen de codage (62) exécutent des traitements de codage différents ;

**caractérisé par** :

un contrôleur de flux (7) adapté à mettre en paquet le flux de données de fréquences supérieures (14) et à le superposer en tant que données d'utilisateur avec le flux de données de fréquences inférieures (13) en conformité avec la spécification de la norme.

**2.** Dispositif de traitement d'image (100) selon la revendication 1, dans lequel au moins l'une des conditions suivantes est satisfaite :

(a) le premier moyen de codage (61) comporte un moyen de traitement de codage ayant un rendement de compression supérieur à celui du second moyen de codage (62) ; et/ou
(b) le second moyen de codage (62) comporte un moyen de traitement de codage ayant une échelle de circuit inférieure à celle du premier moyen de codage (61).

**3.** Dispositif de traitement d'image (100) selon la revendication 1, dans lequel le moyen de séparation temporelle en sous-bandes (31) est un convertisseur temporel d'ondelettes et exécute un processus de division d'un signal de trame en composantes de fréquences basses (11) et en composantes de fréquences hautes (12), en effectuant une transformation de Haar entre une pluralité de trames temporellement adjacentes.

**4.** Dispositif de traitement d'image (100) selon la revendication 1, dans lequel le moyen de séparation temporelle en sous-bandes (31) reçoit, en tant que signal d'image, un signal d'image à P trames par seconde, où P est un entier, et génère un signal de séparation en sous-bandes de fréquences inférieures (11) et un signal de séparation en sous-bandes de fréquences supérieures (12), tous deux à (P/Q) trames/seconde, où Q est égal à une puissance de 2, en exécutant un processus de séparation temporelle en sous-bandes ; dans lequel, de façon facultative, le premier moyen de codage (61) et le second moyen de codage (62) exécutent un processus de codage à (P/Q) trames par seconde.

**5.** Dispositif de traitement d'image (100) selon la revendication 1, comprenant en outre :

un moyen d'enregistrement (8) pour enregistrer un flux de données de fréquences inférieures (11) délivré en sortie par le premier moyen de codage (61) et un flux de données de fréquences supérieures (12) délivré en sortie par le second moyen de codage (62) ;
un premier moyen de décodage (61) pour recevoir un flux de données de fréquences inférieures enregistré dans le moyen d'enregistrement (8) et exécuter un processus de décompression des composantes de fréquences basses ;
un second moyen de décodage (62) pour recevoir un flux de données de fréquences supérieures enregistré dans le moyen d'enregistrement (8) et exécuter un processus de décompression des composantes de fréquences hautes ; et

un moyen de combinaison temporelle de sous-bandes (31), de façon facultative un convertisseur temporel inverse d'ondelettes, pour générer un signal d'image combiné à une vitesse de trame supérieure à la vitesse de trame des signaux d'image qui sont les résultats du décodage par le premier moyen de décodage (61) et par le second moyen de décodage (62), en exécutant un processus de combinaison temporelle de sous-bandes sur les signaux d'images qui sont les résultats du décodage par le premier moyen de décodage (61) et par le second moyen de décodage (62).

6. Dispositif de traitement d'image (400) selon la revendication 1,

dans lequel le moyen de séparation temporelle en sous-bandes (35) génère une pluralité de signaux de séparation en sous-bandes de fréquences supérieures (92, 93, 94), et

dans lequel les vitesses de trame du signal de séparation en sous-bandes de fréquences inférieures (91) et de la pluralité de signaux de séparation en sous-bandes de fréquences supérieures (92, 93, 94) sont les vitesses de trame qui sont déterminées en fonction du nombre qui est le total du signal de séparation en sous-bandes de fréquences inférieures (91) et de la pluralité de signaux de séparation en sous-bandes de fréquences supérieures (92, 93, 94) ; dans lequel, de façon facultative, le second moyen de codage (64 à 66) comporte une pluralité de moyens de codage différents (64 à 66) pour exécuter un processus de compression sur chaque signal de la pluralité de signaux de séparation en sous-bandes de fréquences supérieures (92 à 94).

7. Dispositif de traitement d'image (100) selon la revendication 1,

dans lequel le moyen de séparation temporelle en sous-bandes (35) génère un signal de séparation en sous-bandes de fréquences inférieures (91) en exécutant un processus d'addition de valeurs de signaux de pixels correspondants de N, avec N ≥ 2, trames d'image continues par rapport au temps, qui sont contenues dans le signal d'image et génère N-1 signaux de séparation en sous-bandes de fréquences supérieures (92 à 94) en exécutant des processus d'addition et de soustraction de valeurs de signaux de pixels correspondants de N, avec N ≥ 2, trames d'image continues par rapport au temps, qui sont contenues dans le signal d'image, et

dans lequel chacun des N-1 signaux de séparation en sous-bandes de fréquences supérieures (92 à 94) est un signal calculé en déterminant différemment une combinaison de trames d'image pour laquelle un processus d'addition et un processus de soustraction sont exécutés.

8. Dispositif de traitement d'image (100) selon la revendication 1, comprenant en outre :

un élément de prise d'image (25) configuré pour obtenir un signal d'image par conversion photoélectrique, dans lequel le moyen de séparation temporelle en sous-bandes (31) génère un signal de séparation en sous-bandes de fréquences inférieures (11) à une vitesse de trame inférieure à la vitesse de trame d'un signal provenant de l'élément de prise d'image (25) et un signal de séparation en sous-bandes de fréquences supérieures (12) en exécutant un processus sur le signal d'image provenant de l'élément de prise d'image (25).

9. Dispositif de traitement d'image (100) comprenant :

un premier moyen de décodage (61) pour recevoir un flux de données de fréquences inférieures (13) enregistré dans un moyen d'enregistrement (8) en conformité avec une spécification de norme telle que H.264 ou similaire et exécuter un processus de décompression des composantes de fréquences basses ;

un second moyen de décodage (62) pour recevoir un flux de données de fréquences supérieures (14) enregistré dans le moyen d'enregistrement (8) et exécuter un processus de décompression des composantes de fréquences hautes ; et

un moyen de combinaison temporelle de sous-bandes (31) pour générer un signal d'image combiné à une vitesse de trame supérieure à la vitesse de trame des signaux d'image qui sont les résultats du décodage par le premier moyen de décodage (61) et par le second moyen de décodage (62) en exécutant un processus de combinaison temporelle de sous-bandes sur les signaux d'image qui sont le résultat du décodage par le premier moyen de décodage (61) et par le second moyen de décodage (62) ;

**caractérisé par** :

un contrôleur de flux (7) adapté à séparer les données d'utilisateur mises en paquet provenant du flux de données de fréquences inférieures enregistré en conformité avec la spécification de la norme et à les délivrer audit second moyen de décodage (62) en tant que flux de données de fréquences supérieures (14).

**10.** Dispositif de traitement d'image (100; 400) selon la revendication 9, dans lequel au moins l'un des points suivants est satisfait :

(a) le premier moyen de décodage (61) effectue le décodage de données (13) codées avec un rendement de compression supérieur à celui des données (14) destinées à être décodées par le second moyen de décodage (62) ; et/ou

(b) dans lequel le second moyen de décodage (64 à 66) comporte une pluralité de moyens de décodage différents (64 à 66) pour exécuter un processus de décompression sur chaque élément d'une pluralité d'éléments de flux de données de fréquences supérieures (96 à 98) enregistrés dans le moyen d'enregistrement (81).

**11.** Dispositif de traitement d'image (400) selon la revendication 9,
dans lequel le second moyen de décodage (64 à 66) reçoit une pluralité d'éléments différents (96 à 98) de flux de données de fréquences supérieures enregistrés dans le moyen d'enregistrement (81) et génère une pluralité de signaux d'images différents de composantes de fréquences hautes, et
dans lequel le moyen de combinaison temporelle de sous-bandes (35) génère un signal d'image combiné à une vitesse de trame supérieure en exécutant un processus temporel de combinaison de sous-bandes sur un signal d'image qui est le résultat du décodage par le premier moyen de décodage (63) et une pluralité de signaux d'images différents qui sont les résultats du décodage par le second moyen de décodage (64 à 66).

**12.** Dispositif de traitement d'image (400) selon la revendication 9,
dans lequel le moyen de combinaison temporelle de sous-bandes (35) génère un signal d'image combiné à une vitesse de trame déterminée en fonction du nombre qui est le total du signal d'image de composantes de fréquences basses, qui sont générées par le premier moyen de décodage (63) et des signaux d'image de composantes de fréquences hautes, qui sont générées par le second moyen de décodage (64 à 66).

**13.** Procédé de traitement d'image comprenant les étapes consistant à :

générer un signal de séparation en sous-bandes de fréquences inférieures (11) formé de composantes de fréquences basses à une vitesse de trame inférieure à la vitesse de trame du signal d'image et un signal de séparation en sous-bandes de fréquences supérieures (12) formé de composantes de fréquences hautes en exécutant un processus de séparation temporelle en sous-bandes sur le signal d'image ;
compresser le signal de séparation en sous-bandes de fréquences inférieures pour produire un flux de données de fréquences inférieures (13) en conformité avec une spécification de norme telle que H.264 ou similaire ; et
compresser le signal de séparation en sous-bandes de fréquences supérieures pour produire un flux de données de fréquences supérieures ;
dans lequel l'étape de compression du signal de séparation en sous-bandes de fréquences inférieures et l'étape de compression du signal de séparation en sous-bandes de fréquences supérieures sont exécutées conformément à des processus de codage différents ;

**caractérisé par** :

la mise en paquet du flux de données de fréquences supérieures (14) et sa superposition en tant que données d'utilisateur avec le flux de données de fréquences inférieures (13) en conformité avec la spécification de la norme.

**14.** Procédé de traitement d'image comprenant les étapes consistant à :

recevoir un flux de données de fréquences inférieures (13) en conformité avec une spécification de norme telle que H.264 ou similaire et exécuter un processus de décompression des composantes de fréquences basses ;
recevoir un flux de données de fréquences supérieures (14) et exécuter un processus de décompression des composantes de fréquences hautes ; et
générer un signal d'image combiné à une vitesse de trame supérieure à la vitesse de trame d'un premier signal d'image en exécutant un processus de combinaison temporelle de sous-bandes en se basant sur le premier signal d'image obtenu par un processus de décompression du flux de données de fréquences inférieures (13) et un second signal d'image obtenu par un processus de décompression du flux de données de fréquences supérieures (14) ;

**caractérisé par** :

la séparation des données d'utilisateur mises en paquets du flux de données de fréquences inférieures et leur fourniture en tant que dit flux de données de fréquences supérieures (14) audit processus de décompression des composantes de fréquences hautes.

15. Programme pour faire exécuter par un ordinateur un procédé de traitement d'informations selon la revendication 13 ou 14.

## FIG. 1

100

- 1 — IMAGE-CAPTURING OPTICAL SYSTEM
- 2 — IMAGE-CAPTURING ELEMENT
- 31 — TIME SUBBAND SPLITTING UNIT (TIME SUBBAND COMBINING UNIT)
- 4 — FRAME MEMORY
- 11, 12
- 51 — CAMERA SIGNAL PROCESSOR A
- 52 — CAMERA SIGNAL PROCESSOR B
- 61 — FIRST CODEC UNIT
- 62 — SECOND CODEC UNIT
- 9 — FINDER OUTPUT UNIT → TO FINDER
- 10 — VIDEO OUTPUT UNIT → VIDEO OUTPUT
- 13, 14
- 7 — STREAM CONTROLLER
- 8 — RECORDER

# FIG. 2

EP 2 094 018 B1

# FIG. 3

FIG. 4

(t)

(d) LOW-FREQUENCY IMAGE DATA (HD 60 f/s)

(e) HIGH-FREQUENCY IMAGE DATA (HD 60 f/s)

DATA TRANSFORM (WAVELET TRANSFORM)

(f) OUTPUT IMAGE DATA (HD 120 f/s)

H.264 DECODER

JPEG DECODER

A'  B'  C'  D'  E'  F'  G'  H'

$\frac{N}{+}N+1$  $\frac{N+2}{+}N+3$  $\frac{N+4}{+}N+5$  $\frac{N+6}{+}N+7$

$\frac{N}{-}N+1$  $\frac{N+2}{-}N+3$  $\frac{N+4}{-}N+5$  $\frac{N+6}{-}N+7$

N  N+1  N+2  N+3  N+4  N+5

60 f/s

120 f/s

FRAME MEMORY

4

# FIG. 5

H.264
DECODER ⇨

| $\begin{array}{c}N\\+\\N+1\end{array}$ | | $\begin{array}{c}N+2\\+\\N+3\end{array}$ | | $\begin{array}{c}N+4\\+\\N+5\end{array}$ | | $\begin{array}{c}N+6\\+\\N+7\end{array}$ | (g) | LOW-FREQUENCY IMAGE DATA (HD 60 f/s) |

$\begin{array}{c}N\\+\\N+1\end{array}$     $\begin{array}{c}N+2\\+\\N+3\end{array}$     $\begin{array}{c}N+4\\+\\N+5\end{array}$     $\begin{array}{c}N+6\\+\\N+7\end{array}$    (h) OUTPUT IMAGE DATA (HD 60 f/s)

EP 2 094 018 B1

# FIG. 6

EP 2 094 018 B1

## FIG. 7

# FIG. 8

103

- **1** IMAGE-CAPTURING OPTICAL SYSTEM
- **2** IMAGE-CAPTURING ELEMENT
- **31** TIME SUBBAND SPLITTING UNIT (TIME SUBBAND COMBINING UNIT)
- **4** FRAME MEMORY
- **11** · **51** CAMERA SIGNAL PROCESSOR A
- **12** · **52** CAMERA SIGNAL PROCESSOR B
- **9** FINDER OUTPUT UNIT → TO FINDER
- **61** FIRST CODEC UNIT
- **62** SECOND CODEC UNIT
- **13** · **71** STREAM CONTROLLER A
- **14** · **72** STREAM CONTROLLER B
- **81** RECORDER A
- **82** RECORDER B
- **10** VIDEO OUTPUT UNIT → VIDEO OUTPUT

EP 2 094 018 B1

## FIG. 9

VIDEO INPUT → VIDEO INPUT UNIT (17) → TIME SUBBAND SPLITTING UNIT (TIME SUBBAND COMBINING UNIT) (33)

FRAME MEMORY (4)

15 → FIRST CODEC UNIT (61) → 13 → STREAM CONTROLLER (7) → RECORDER (8)

16 → SECOND CODEC UNIT (62) → 14 → STREAM CONTROLLER (7)

→ VIDEO OUTPUT UNIT (10) → VIDEO OUTPUT

200

EP 2 094 018 B1

# FIG. 10

EP 2 094 018 B1

## FIG. 11

400

IMAGE-CAPTURING OPTICAL SYSTEM — 1

IMAGE-CAPTURING ELEMENT — 25

TIME SUBBAND SPLITTING UNIT (TIME SUBBAND COMBINING UNIT) — 35

FRAME MEMORY — 4

91 — CAMERA SIGNAL PROCESSOR A — 56
92 — CAMERA SIGNAL PROCESSOR B — 57
93 — CAMERA SIGNAL PROCESSOR C — 58
94 — CAMERA SIGNAL PROCESSOR D — 59

FINDER OUTPUT UNIT — 9 → TO FINDER

FIRST CODEC UNIT — 63 — 95
SECOND CODEC UNIT — 64 — 96
THIRD CODEC UNIT — 65 — 97
FOURTH CODEC UNIT — 66 — 98

STREAM CONTROLLER — 71

RECORDER — 81

VIDEO OUTPUT UNIT — 10 → VIDEO OUTPUT

EP 2 094 018 B1

# FIG. 12

Frame0

G(0,0,0) R(1,0,0) G(2,0,0) R(3,0,0)

B(0,1,0) G(1,1,0) B(2,1,0) G(3,1,0)

Frame1

G(0,0,1) R(1,0,1) G(2,0,1) R(3,0,1)

B(0,1,1) G(1,1,1) B(2,1,1) G(3,1,1)

Frame2

G(0,0,2) R(1,0,2) G(2,0,2) R(3,0,2)

B(0,1,2) G(1,1,2) B(2,1,2) G(3,1,2)

Frame3

G(0,0,3) R(1,0,3) G(2,0,3) R(3,0,3)

B(0,1,3) G(1,1,3) B(2,1,3) G(3,1,3)

$G_{LL}(0,0,0)$
$G_{LH}(0,0,0)$
$G_{HL}(0,0,0)$
$G_{HH}(0,0,0)$

EP 2 094 018 B1

FIG. 13

(a) OUTPUT DATA FROM IMAGE-CAPTURING ELEMENT (HD 240 fps)

A | B | C | D | E | F | G | H → (t)

N | N+1 | N+2 | N+3 | N+4 | N+5 | N+6 | N+7

240 fps

4

FRAME MEMORY

60 fps

35 TIME SUBBAND SPLITTING UNIT (2-STEP Haar TRANSFORM)

(b) LL IMAGE DATA (HD 60 fps)

N + N+1 + N+2 + N+3

H.264 ENCODER

(c) LH IMAGE DATA (HD 60 fps)

N + N+1 − N+2 − N+3

(d) HL IMAGE DATA (HD 60 fps)

N − N+1 + N+2 − N+3

JPEG ENCODER

(e) HH IMAGE DATA (HD 60 fps)

N − N+1 + N+2 − N+3

EP 2 094 018 B1

# FIG. 14

A'　B'　C'　D'　E'　F'　G'　H'　(t)

H.264 DECODER →

N + N+1 + N+2 + N+3

N + N+1 − N+2 − N+3

N − N+1 + N+2 − N+3

N − N+1 + N+2 − N+3

N+4 + N+5 + N+6 + N+7

N+4 + N+5 − N+6 − N+7

N+4 − N+5 + N+6 − N+7

N+4 − N+5 + N+6 − N+7

JPEG DECODER →

(f) LOW-FREQUENCY LL IMAGE DATA (HD 60 fps)

(g) HIGH-FREQUENCY LH IMAGE DATA (HD 60 fps)

(h) HIGH-FREQUENCY HL IMAGE DATA (HD 60 fps)

(i) HIGH-FREQUENCY HH IMAGE DATA (HD 60 fps)

35 — TIME SUBBAND SPLITTING UNIT (2-STEP INVERSE Haar TRANSFORM)

TIME SUBBAND SPLITTING UNIT (2-STEP INVERSE Haar TRANSFORM) — 35

4 — FRAME MEMORY

60 fps

240 fps

OUTPUT IMAGE DATA (HD 240 fps)

N　N+1　N+2　N+3

EP 2 094 018 B1

FIG. 15

## REFERENCES CITED IN THE DESCRIPTION

**Patent documents cited in the description**

- JP 1286586 A
- JP 5316402 A

**Non-patent literature cited in the description**

- **Heiko Schwarz ; Detlev Marpe ; Thomas Wiegand.** MCTF and Scalability Extension of H.264/AVC. *PCS '04,* December 2004
- **J.Reichel ; H.Schwarz.** Scalable Video Coding - Joint Scalable Video Model JSVM-2. *JVT-0201,* April 2005
- **J.Reichel ; H.Schwarz.** Scalable Video Coding - Joint Scalable Video Model JSVM-2. *JVT-O201,* April 2005
- **Xiangyang Ji et al.** Architectures of Incorporating MPEG-4 Avc into Three-dimensional Subband Video Coding. *Picture Coding Symposium,* 15 December 2004, vol. 24